(19)

Europäisches
Patentamt
European
Patent Office
Office européen
des brevets

(11) **EP 4 756 912 A1**

(12) **EUROPEAN PATENT APPLICATION**
published in accordance with Art. 153(4) EPC

(43) Date of publication:
10.06.2026  Bulletin 2026/24

(21) Application number: 25832201.5

(22) Date of filing: 03.07.2025

(51) International Patent Classification (IPC):
$H01M\ 4/36^{(2006.01)}$  $H01M\ 4/62^{(2006.01)}$
$H01M\ 4/38^{(2006.01)}$  $C01B\ 32/05^{(2017.01)}$

(52) Cooperative Patent Classification (CPC):
C01B 32/05; H01M 4/36; H01M 4/38; H01M 4/62;
Y02E 60/10

(86) International application number:
PCT/CN2025/106950

(87) International publication number:
WO 2026/008036 (08.01.2026 Gazette 2026/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 04.07.2024  CN 202410889616
04.09.2024  CN 202411238653
20.09.2024  CN 202411319473

(60) Divisional application:
26166949.3

(71) Applicants:
• Carbon One New Energy Group Co., Ltd.
Quzhou, Zhejiang 324000 (CN)
• Carbon One New Energy Hangzhou Co., Ltd.
Hangzhou, Zhejiang 311100 (CN)
• Zhejiang Lichen New Material Technology Co.,
Ltd
Huzhou, Zhejiang 313100 (CN)

(72) Inventors:
• YUE, Min
Quzhou, Zhejiang 324000 (CN)
• DU, Ning
Quzhou, Zhejiang 324000 (CN)
• QIU, Xiaoyu
Hangzhou, Zhejiang 311100 (CN)
• YU, Li
Hangzhou, Zhejiang 311100 (CN)
• YANG, Wenyue
Changxing National-level Economic
and Technological Development Zone
Huzhou, Zhejiang 313100 (CN)

(74) Representative: Vogelbruch, Keang
VOGELBRUCH Patentanwaltsgesellschaft mbH
Paul-Gerhardt-Straße 16
40593 Düsseldorf (DE)

(54) **CARBON MATERIAL, SILICON-CARBON NEGATIVE ELECTRODE MATERIAL, AND PREPARATION METHOD FOR AND USE OF SILICON-CARBON NEGATIVE ELECTRODE MATERIAL**

(57)     The present disclosure relates to the technical field of battery negative electrode materials, and disclosed are a carbon material, a silicon-carbon negative electrode material, and a preparation method for and a use of the silicon-carbon negative electrode material. In the negative electrode material, silicon is distributed within pores of a porous substrate, and the volume expansion of silicon in a lithium deintercalation process is suppressed by using the pore structure of the porous substrate, thereby improving the cycle performance of the negative electrode material. The silicon-carbon composite material exhibits high sphericity, avoids poor compression resistance due to numerous edges and corners during rolling, and can mitigate the problems of continuous formation of solid electrolyte interface (SEI) films, reduced capacity and poor cycle performance caused by low strength. Porous carbon is prepared using a nanoscale carbon nanotube, facilitating improvement of the electrical conductivity of the porous carbon; and in addition, a tin or germanium element doped into the negative electrode material facilitates deintercalation of lithium ions by lowering the energy barrier of lithium ion transition, thereby improving the initial coulombic efficiency.

Figure 1

**Description**

**Cross-Reference to Related Applications**

The present disclosure claims the priority to Chinese Patent Application No. 2024108896162, filed with the China National Intellectual Property Administration on July 04, 2024 and entitled "NEGATIVE ELECTRODE MATERIAL, PREPARATION METHOD THEREFOR AND USE THEREOF";

to Chinese Patent Application No. 2024112386533, filed with the China National Intellectual Property Administration on September 04, 2024 and entitled "SILICON-CARBON COMPOSITE MATERIAL, PREPARATION METHOD THEREFOR AND USE THEREOF"; and
to Chinese Patent Application No. 2024113194738, filed with the China National Intellectual Property Administration on September 20, 2024 and entitled "METHOD FOR PREPARING POROUS CARBON, POROUS CARBON, NEGATIVE ELECTRODE MATERIAL AND SECONDARY BATTERY", which are incorporated herein by reference in their entirety.

**Technical Field**

The present disclosure relates to the technical field of battery negative electrode materials, and in particular to a carbon material, a silicon-carbon negative electrode material, and a preparation method therefor and the use thereof.

**Background**

First, silicon is a negative electrode material with the highest theoretical capacity at present, with a specific capacity of up to 4200 mAh/g, much higher than that of graphite (the theoretical capacity of graphite-based negative electrode materials is only 372 mAh/g). Moreover, silicon has the advantages of a low lithium intercalation potential and low cost, and is expected to replace graphite as the negative electrode material for the next generation of lithium-ion batteries. However, silicon, as a negative electrode material, undergoes severe volume expansion and contraction during the lithium intercalation and delithiation process, which leads to easy pulverization of the material and detachment thereof from the current collector, resulting in the loss of the electrochemical performance.
Because of the structural stability of carbon materials, which have relatively small volume changes during charging and discharging, they have a better cycling stability. Moreover, the carbon materials have similar chemical properties to that of silicon, and silicon and carbon are often compounded to alleviate the volume expansion effect of silicon and improve the electrochemical stability thereof. However, the negative electrode materials obtained by the existing silicon-carbon compounding method have a poor cycling performance, which is the second problem to be solved urgently.
Next, in the present disclosure, lithium-ion batteries are indispensable in the fields such as traditional 3C consumer electronics, new energy power batteries, high-power power plants, large-scale energy storage power stations. As a traditional battery negative electrode material, the actual capacity of graphite has gradually approached the theoretical true capacity thereof with the advancement of technology. In this context, silicon negative electrodes with a higher theoretical capacity are considered the best candidates for the next generation of high-capacity batteries. In order to suppress the expansion of silicon during charging and discharging, and to improve the conductivity of elemental silicon, it is necessary to coat a porous carbon substrate with a high specific surface area with silicon.
During the battery manufacturing process, there are certain requirements for the strength of silicon-carbon composite materials to prevent particle breakage due to rolling, which will lead to the exposure of silicon particles and serious volume expansion thereof during charging and discharging and thus affects battery performance. The strength of silicon-carbon composite materials is related to a variety of factors, such as a material particle size, a silicon content and morphology. The particle breakage caused by rolling is highly dependent on the morphology of silicon-carbon materials. For the irregular silicon-carbon composite materials, the interparticle compression due to rolling during the battery manufacturing process, result in the breakage of irregular edges and corners, and the detachment of internal active materials, which is not conducive to the formation of a stable SEI film. This represents the first problem to be solved urgently.
Finally, silicon-based materials in the present disclosure, as a high-performance negative electrode material for lithium-ion batteries, have the advantages such as a high theoretical capacity (about 4200mAh/g, much higher than 372mAh/g of graphite) and a relatively low lithiation potential. However, there are also challenges, including a low conductivity and a low lithium activity.
The low conductivity of silicon-based materials limits the diffusion speed of lithium ions and the efficiency of electron transport, thus affecting the rate performance and cycling stability of the batteries. The existing solutions include doping or coating with a conductive material, etc., to increase the conductivity, but doping the conductive material directly into the silicon-based material has limited effect on improving the conductivity of the silicon-based material. The low lithium activity of silicon-based materials is due to the significant volume expansion and contraction during the lithiation/de-lithiation process, which thus leads to poor contact between the active material and the current collector.

The low conductivity and low lithium activity are two major challenges for silicon-based materials in the application of lithium-ion battery negative electrodes. How to effectively improve the conductivity and lithium activity of silicon-based materials, thereby improving the performance of lithium-ion batteries, is the third problem to be solved urgently.

**Summary**

An object of the present disclosure is to provide a carbon material, a silicon-carbon negative electrode material and a preparation method therefor and the use thereof, and a method for testing the silicon-carbon composite material.

First, the present disclosure provides a negative electrode material, a preparation method therefor and the use thereof, improving the cycling performance of the negative electrode material.

The present disclosure is implemented as follows.

In a first aspect, the present disclosure provides a negative electrode material comprising a porous substrate, a silicon element distributed within pores of the porous substrate, and carbon coated on a surface of the porous substrate. The negative electrode material has a silicon content of 30 wt%-80 wt%, a resistivity of less than 5 $\Omega \cdot$ cm, and a value of W > 8, where W = silicon content/resistivity, with the silicon content being in wt% and the resistivity being in $\Omega \cdot$ cm.

In an optional embodiment, the negative electrode material has a specific surface area of 4 $m^2$/g-9 $m^2$/g;

and/or the negative electrode material has a Dv50 of 1 $\mu$m-15 $\mu$m;
and/or the negative electrode material has a tap density of 0.7 $g/cm^3$-1.5 $g/cm^3$.

In a second aspect, the present disclosure further provides a method for preparing the negative electrode material of any one of the preceding embodiments, comprising:

a low-temperature adsorption, involving placing a porous substrate in an environment containing a silicon source gas and adsorbing the silicon source gas;
a high-temperature pyrolysis, involving heating the porous substrate adsorbed with the silicon source gas to decompose the silicon source gas, so as to obtain a porous substrate supported with nano-silicon within a pore structure; and
a coating treatment, involving forming a carbon coating layer on the porous substrate supported with nano-silicon within the pore structure, to obtain the negative electrode material.

In an optional embodiment, the low-temperature adsorption step is carried out in a low-temperature adsorption apparatus, and is completed when the silicon source gas is discharged from the tail gas outlet of the low-temperature adsorption apparatus during the low-temperature adsorption process.

Optionally, the low-temperature adsorption is carried out at a temperature of 25°C-200°C and a pressure of 0.0001 KPa-0.3 Kpa for a time of 1 h-30 h. More optionally, the low-temperature adsorption is carried out at temperature of 30°C-150°C and a pressure of 0.001 KPa-0.1 KPa for a time of 2 h-25 h.

Optionally, the silicon source is selected from at least one of silane, disilane, dichlorosilane, and trichlorosilane.

Optionally, the silicon source-containing gas further comprises an inert gas, and the volume fraction of the silicon source in the silicon source-containing gas is between 50 vol%-99 vol%.

In an optional embodiment, the high-temperature pyrolysis step is carried out in a high-temperature pyrolysis apparatus, and is completed when the gas discharged from the tail gas outlet of the high-temperature pyrolysis apparatus is free of hydrogen during the high-temperature pyrolysis process.

Optionally, the high-temperature pyrolysis is carried out at a temperature of 300°C-800°C and a pressure of 0.01 Kpa-5 Kpa for a time of 1 h-50 h. More optionally, the high-temperature pyrolysis is carried out at a temperature of 400°C-700°C and a pressure of 0.01 Kpa-3 KPa for a time of 1 h-40 h.

In an optional embodiment, the porous substrate satisfies at least one of the following A-G:

A, an SPAN value is < 1.5;
B, Dv50 ranges from 2 $\mu$m-20 $\mu$m;
C, the porous substrate has a specific surface area of 400 $m^2$/g-2000 $m^2$/g, optionally 900 $m^2$/g-2000 $m^2$/g;
D, an average pore size is 1.2 nm-7.0 nm, optionally 1.5 nm-5.0 nm;
E, a pore volume is 0.3 $cm^3$/g- 2.0 $cm^3$/g, optionally 0.5 $cm^3$/g-1.8 $cm^3$/g;
F, a pore size concentration is 0.3-6.0, calculated as $(P_v90-P_v10)/P_v50$, optionally 0.3-8; and

G, the porous substrate is selected from at least one of a porous carbon, porous metal oxides, coordination polymers, porous metals, and porous ceramics, optionally a porous carbon.

In an optional embodiment, the coating treatment comprises introducing a carbon-containing gas source into a reactor where a porous substrate supported with nano-silicon within the pore structure is placed for carbon deposition to form a carbon coating layer.

Optionally, the carbon deposition is carried out at a temperature of 300°C-1300°C for a time of 1 h-10 h. Optionally, the temperature of the carbon deposition is 400°C-1000°C, more optionally 400°C-600°C.

Optionally, the carbon-containing gas source comprises a carbon source gas selected from alkane gases with a cracking temperature within the carbon deposition temperature range.

Optionally, the carbon-containing gas source further comprises an inert gas.

Optionally, the volume fraction of the carbon source gas in the carbon-containing gas source is 50 vol%-99 vol%.

In a third aspect, the present disclosure further provides a negative electrode plate comprising a negative electrode material of any one of the preceding embodiments or the negative electrode material prepared by the method of any one of the preceding embodiments.

In a fourth aspect, the present disclosure further provides a secondary battery comprising a negative electrode plate of the preceding embodiments.

In a fifth aspect, the present disclosure further provides an electrical device comprising a secondary battery of the preceding embodiments.

The negative electrode material, the preparation method therefor and the use thereof in the present disclosure have the following beneficial effects.

In the negative electrode material of the present disclosure, silicon is distributed within the pores of a porous substrate, and the pore structure of the porous substrate is utilized to suppress the volume expansion of silicon during the intercalation and de-intercalation of lithium, thereby improving the cycling performance of the negative electrode material.

In the method for preparing the negative electrode material of the present disclosure, a silicon source is first adsorbed within the cavities of the porous substrate; and the temperature inside the furnace is then raised to decompose the silane in the cavities, resulting in the deposition of nano-silicon particles in the cavities, such that the content of floating silicon is reduced.

Next, the present disclosure provides a silicon-carbon composite material, a preparation method therefor and the use thereof. The silicon-carbon composite material as described in the present disclosure has a high sphericity, such that the poor compression resistance due to many edges and corners is avoided during the rolling process, thereby allowing particle breakage to be prevented, and the issues of the continuous formation of the solid electrolyte interface (SEI) film, the capacity attenuation, and the poor cycling performance caused by a low strength can be alleviated.

In order to achieve the above-mentioned object, the following technical solution is used in the present disclosure.

In a sixth aspect, the present disclosure provides a silicon-carbon composite material, comprising active material particles, wherein the active material particles comprise a spherical porous carbon skeleton and nano-silicon particles.

A strength of the silicon-carbon composite material is defined by the following formula:

$$P = (1 - \frac{S_2 - S_1}{S_1}) \times 100\%$$

wherein P represents the strength of the silicon-carbon composite material, in %; $S_2$ represents the specific surface area of the silicon-carbon composite material after compression, in m$^2$/g; and $S_1$ represents the specific surface area of the silicon-carbon composite material before compression, in m$^2$/g.

Preferably, the specific surface area of the silicon-carbon composite material is 2-5 m$^2$/g.

Preferably, when compressed at a pressure of 450 MPa for 30 s, the silicon-carbon composite material has a strength of 90% or more.

Preferably, a sphericity of the spherical porous carbon is $\geq$ 80%.

Preferably, the spherical porous carbon contains uniformly distributed micropores and/or mesopores inside.

Preferably, the total pore volume of the spherical porous carbon with an average pore size of less than 4 nm is $\geq$ 0.7 cm$^3$/g.

Preferably, the spherical porous carbon has a mesoporosity of < 20% and a microporosity of > 80%.

Preferably, the spherical porous carbon has a particle size of 1-60 um; wherein the spherical porous carbon has a D$_{10}$ particle size of 3-7 $\mu$m; a Dv50 particle size of 8-13 $\mu$m; and a D$_{90}$ particle size of 15-40 $\mu$m.

Preferably, the nano-silicon particles are deposited in the pores of the spherical porous carbon.

Preferably, the silicon-carbon composite material has a silicon content of 40-60%.

Preferably, the specific capacity of the silicon-carbon composite material is > 1500 mAh/g, preferably > 1800 mAh/g.

Preferably, the capacity retention rate after 200 cycles of the silicon-carbon composite material is > 90%.

In a seventh aspect, the present disclosure provides a method for preparing the silicon-carbon composite material of the first aspect, comprising the steps of:

mixing low-carbon-source microspheres, a high-carbon-source resin, and a solvent to obtain a mixed solution;
subjecting the mixed solution to a spray drying treatment to obtain small spherical particles;
successively subjecting the small spherical particles to a carbonization treatment and an activation treatment to obtain a spherical porous carbon; and
performing a vapor deposition on the spherical porous carbon to obtain the silicon-carbon composite material.

Preferably, a residual carbon content of the low-carbon-source microspheres is ≤ 40%.

Preferably, a residual carbon content of the high-carbon-source resin is 50 to 70%.

Preferably, the low-carbon-source microspheres comprise any one or a combination of at least two of polystyrene microspheres, polylactic acid microspheres, or polyvinylidene fluoride microspheres.

Preferably, the high-carbon-source resin is a phenolic resin and/or a phenolic resin derivative.

Preferably, a mass ratio of the low-carbon-source microspheres to the high-carbon-source resin is 1 : (1-5).

Preferably, the solvent comprises an alcohol solvent, preferably ethanol.

Preferably, a solid content of the mixed solution is 30-60 wt%.

Preferably, the mixed solution further comprises 5-10 wt% of carbon tubes.

Preferably, the mixed solution further comprises a conductive polymer, wherein the conductive polymer comprises any one or a combination of at least two of polyacetylene, polythiophene, polypyrrole, or polyaniline.

Preferably, the spray drying treatment process parameters comprise: a centrifugal disc rotation speed of 24000-30000 rpm; an inlet air temperature of 160-230°C; a feed rate of 1.2-4 L/h; and an induced draft fan frequency of 40-50 Hz.

Preferably, the carbonization treatment is carried out at a temperature of 400-900°C for a time of 3-10 h.

Preferably, the activation treatment is carried out by means of physical activation.

Preferably, the physical activation step involves introducing an activation gas into the carbon microspheres obtained after the carbonization treatment for physical activation.

Preferably, the activation gas comprises carbon dioxide and/or water vapor.

Preferably, the physical activation is carried out at a temperature of 800-1000°C for a time of 7-20 h.

Preferably, the activation treatment is followed by a further step of impurity removal, involving subjecting the activated porous carbon microspheres to acid washing for impurity removal, followed by water washing and then drying.

Preferably, the acid washing is carried out using 5-8 wt% of a hydrochloric acid solution.

Preferably, the acid washing is carried out at a temperature of 20-100°C for a time of 1-24 h.

Preferably, the temperature of the drying is 70-90°C.

Preferably, the deposition gas source for the vapor deposition is a mixed gas of a protective gas and a silicon source gas.

Preferably, the protective gas comprises any one or a combination of at least two of nitrogen, neon, argon, krypton, xenon, or radon.

Preferably, the silicon source gas comprises any one or a combination of at least two of silane, disilane, dichlorosilane, or trichlorosilane.

Preferably, the silicon source gas further comprises a carbon source gas, and the carbon source gas comprises any one or a combination of at least two of methane, ethane, acetylene, or ethylene.

Preferably, the volume ratio of the protective gas to the silicon source gas is (10-30) : (70-90).

Preferably, the content of the carbon source gas accounts for 0-30% of the total volume of the silicon source gas.

Preferably, the ratio of the deposition amount in the vapor deposition to the feed material is (0.4-1.5) : 1.

Preferably, the vapor deposition is carried out at a temperature of 300-800°C for a time of 5-10 h.

In an eighth aspect, the present disclosure provides the use of the silicon-carbon composite material of the first aspect in the preparation of a battery negative electrode material.

In a ninth aspect, the present disclosure provides a testing method for the silicon-carbon composite material, the testing method comprising the steps of:

obtaining the specific surface area of the silicon-carbon composite material before compression, designated as $S_1$;
subjecting the silicon-carbon composite material to a compaction treatment to break the sample, so as to obtain the specific surface area of the silicon-carbon composite material broken after compression, designated as $S_2$; and
calculating the rate of change in the specific surface area of the silicon-carbon composite material by the following formula I to characterize the strength of the silicon-carbon composite material.

The strength of the silicon-carbon composite material is defined by the following formula:

$$P = \left(1 - \frac{S_2 - S_1}{S_1}\right) \times 100\%$$

wherein P represents the strength of the silicon-carbon composite material, in %; $S_2$ represents the specific surface area of the silicon-carbon composite material before compression, in $m^2/g$; and $S_1$ represents the specific surface area of the silicon-carbon composite material after the compaction, in $m^2/g$.

Preferably, the rate of the compaction treatment is 8-12 mm/min, preferably 10 mm/min.

Preferably, the compaction treatment has a pressure-holding time of 10-50 s, preferably 30 s.

Preferably, the compaction treatment is carried out at a pressure of 450-500 MPa.

The silicon-carbon composite material, a preparation method therefor and the use thereof in the present disclosure, have the following beneficial effects as compared to the prior art.

(1) According to the present disclosure, with the morphology of the carbon microspheres and the high carbon content of the phenolic resin, a carbon substrate with a relatively high sphericity is synthesized and by the spray drying technology, the particle size of the carbon microspheres can be well controlled, and the particle size has a good uniformity.

(2) Compared with irregular resin-based silicon-carbon composite materials, the silicon-carbon material synthesized by this method has a higher strength and contains no natural macropores based on biomass inside.

(3) The silicon-carbon negative electrode material described in the present disclosure has a high sphericity, such that the poor compression resistance due to many edges and corners is avoided during the rolling process, and the continuous formation of the solid electrolyte interface (SEI) film, the capacity attenuation, and the poor cycling performance caused by a low strength can be alleviated.

(4) According to the present disclosure, the strength of silicon-carbon composite materials is quantified by comparing the rate of change in the specific surface area before and after the compaction, and the strength is characterized and the strength range of silicon-carbon composite materials is limited by a formula to avoid the problems in the traditional method for testing the strength of silicon-carbon negative electrode materials using a nanoindentation instrument that the sample has no adhesion and is easy to run away under the indenter, which will also lead to platform period and wrong data; and only single particle can be evaluated.

Finally, the present disclosure provides a method for preparing a porous carbon, the porous carbon, a negative electrode material, and a secondary battery, which are beneficial for improving the conductivity of silicon-based materials.

The present disclosure is implemented as follows.

In a tenth aspect, the present disclosure provides a method for preparing a porous carbon, comprising:

granulation, involving drying and granulating a phenolic resin microsphere suspension to obtain a powder, wherein nano-carbon nanotubes are dispersed in the phenolic resin microspheres; and

carbonization, involving successively performing secondary curing, pre-oxidation, and carbonization on the powder to obtain the porous carbon.

In an optional embodiment, the nano-carbon nanotubes have an average length of 20 nm-50 nm and an average aspect ratio of 1.5-5;

and/or the mass ratio of the nano-carbon nanotubes to the total mass of a phenolic raw material and an aldehyde raw material in the phenolic resin microsphere suspension is 1 : (1.5-10);

and/or a doping source is further dispersed in the phenolic resin microspheres, and the doping source comprises at least one of a germanium source and a tin source, the germanium source being selected from at least one of orthogermanate, metagermanate, germanium dihydroxide, and germanium tetrahydroxide, and the tin source being selected from at least one of tin chloride, tin nitrate, and tin sulphate;

and/or a doping source is further dispersed in the phenolic resin microspheres, and the mass ratio of the nano-carbon nanotubes to the doping source in the phenolic resin microsphere suspension is (5-10) : 1.

In an optional embodiment, the method for preparing the phenolic resin microsphere suspension comprises: mixing a dispersant, a doping source, a phenolic raw material, an aldehyde raw material, and a catalyst with an aqueous solution with dispersed nano-carbon nanotubes, and maintaining the temperature to obtain a prepolymer solution; and mixing the prepolymer solution with a curing agent for a first curing to obtain the phenolic resin microsphere suspension.

Preferably, the preparation method for the phenolic resin microsphere suspension satisfies at least one of the following features A-G:

A. the dispersant is selected from at least one of F127, PVA, PEG, and sodium silicate;
B. the aldehyde raw material is selected from at least one of formaldehyde and furfural;
C. the phenolic raw material selected from at least one of phenol and resorcinol, the mass ratio of the phenolic raw material to the aldehyde raw material being 1 : (0.8-1.2);
D. the catalyst is selected from at least one of sodium hydroxide and lithium hydroxide, the ratio of the catalyst to the total mass of the phenolic raw material and the aldehyde raw material being 1 : (25-35);
E. the temperature is maintained for 4 h-6 h at 75°C-85°C;
F. the curing agent is selected from at least one of hexamethylenetetramine and aqueous ammonia, the ratio of the curing agent to the total mass of the phenolic raw material and the aldehyde raw material being 1 : (11-15); and
G. the first curing is carried out at 90-95°C for a time of 2 h-8 h.

In an optional embodiment, the method for preparing the aqueous solution with dispersed nano-carbon nanotubes comprises: subjecting a mixed solution of nano-carbon nanotubes and water to ultrasonic stirring to obtain the aqueous solution with dispersed nano-carbon nanotubes. The preparation method for the aqueous solution with dispersed nano-carbon nanotubes satisfies at least one of the following features a-c:

a. an ultrasound frequency of 50 Hz-70 Hz; a stirring rate of 50 rpm-200 rpm; and an ultrasonic stirring time of 30 min-60 min;
b. the solid content of the aqueous solution with dispersed nano-carbon nanotubes being 0.1 wt%-10 wt%; and
c. the nano-carbon nanotubes being obtained by ball-milling a carbon nanotube raw material, the ball-milling parameters including: a ball-to-material ratio of (20-50) : 1, a ball mill rotation speed of 500 rpm-2000 rpm, and a gas in an inert gas atmosphere.

In an optional embodiment, a mixed solution of a phenolic resin microsphere suspension and a water-soluble binder is spray dried to obtain the powder, the spray drying parameters comprising: an inlet air temperature of 160-200°C; an outlet air temperature of 80°C-120°C; a feed rate of 100 mL/h-300 mL/h; and a centrifugal atomization disc rotation speed of 23000 rpm-27000 rpm;

and/or the water-soluble binder is selected from at least one of a water-soluble resin, a starch, a dextrin and a polyvinyl alcohol;
and/or the volume ratio of the phenolic resin microsphere suspension to the water-soluble binder is 1 : (0.5-4).

In an optional embodiment, the second curing is carried out at a temperature of 100°C-140°C for a time of 1 h-4 h;

and/or the pre-oxidation is carried out at a temperature of 280°C-320°C for a time of 1 h-5 h, with a heating rate of 1°C/min-5°C/min;
and/or the carbonization is carried out at a temperature of 800°C-1000°C for a time of 4 h-8 h, with a heating rate of 4°C/min-6°C/min.

In an optional embodiment, the method further comprises activating the porous carbon with an activating agent to obtain an activated porous carbon, wherein the activation temperature is 700°C-1100°C, the activation time is 2 h-30 h, and the mass ratio of the porous carbon to the activating agent is 1 : (0.5-4).

In an eleventh aspect, the present disclosure provides a porous carbon prepared by the preparation method of the preceding embodiments.

Preferably, the porous carbon satisfies at least one of the following (1) - (4):

(1) a pore volume in a range of 0.3 $cm^3$/g-1.4 $cm^3$/g;
(2) a specific surface area in a range of 800 $m^2$/g-2600 $m^2$/g;
(3) an average pore size of 1.65 nm-3.02 nm; and
(4) the particle size Dv50 in a range of 4 $\mu$m-30 $\mu$m.

In a twelfth aspect, the present disclosure provides a negative electrode material comprising the porous carbon of the preceding embodiments and silicon and/or carbon distributed on the porous carbon.

In a thirteenth aspect, the present disclosure provides a secondary battery comprising the negative electrode material of the preceding embodiments.

The preparation method for a porous carbon, the porous carbon, a negative electrode material, and a secondary battery in the present disclosure have the following beneficial effects.

In the present disclosure, the porous carbon is prepared using nano-scale carbon nanotubes. The good conductivity of the carbon nanotubes is helpful to improve the conductivity of the porous carbon, and the size of the carbon nanotubes has an important influence on the conductivity of the porous carbon. Generally, a continuous conductive path can be formed by increasing the length of the carbon nanotubes, which is more conducive to improving the conductivity of the porous carbon and the mechanical strength of the porous carbon. However, longer carbon nanotubes are prone to agglomeration and have a poorer dispersion stability, which is detrimental to the uniform distribution of carbon nanotubes in the suspension and thus is detrimental to the improvement of the conductivity of the porous carbon. Therefore, the use of nano-scale carbon nanotubes in the present disclosure is more conducive to increasing the conductivity of the porous carbon. In addition, the doping of small amounts of tin or germanium enables the reduction of residual dead lithium by facilitating the intercalation and de-intercalation of lithium ions, and thus improving the initial Coulombic efficiency.

**Brief Description of the Drawings**

In order to illustrate the technical solutions in the particular embodiments of the present disclosure or in the prior art more clearly, the accompanying drawings to be used in the description of the particular embodiments or the prior art will be briefly introduced below; obviously, the accompanying drawings in the following description show some of the embodiments of the present disclosure, and those of ordinary skill in the art may still obtain other drawings from these accompanying drawings without creative effort.

FIG. 1 shows a process flowchart for the preparation of a negative electrode material in Example 1-1 of the present disclosure;

FIG. 2 shows an SEM image of the negative electrode material prepared in Example 1-1 of the present disclosure;

FIG. 3 shows an SEM image of the negative electrode material prepared in Comparative Example 1-6 of the present disclosure;

FIG. 4 shows a scanning electron micrograph of the silicon-carbon negative electrode material prepared in Example 2-1;

FIG. 5 shows a scanning electron micrograph of the silicon-carbon negative electrode material prepared in Example 2-2;

FIG. 6 shows a scanning electron micrograph of the silicon-carbon negative electrode material prepared in Examples 2-3;

FIG. 7 shows a scanning electron micrograph of the silicon-carbon negative electrode material prepared in Comparative Example 2-1;

FIG. 8 shows a scanning electron micrograph of the silicon-carbon negative electrode material prepared in Comparative Example 2-2;

FIG. 9 shows a scanning electron micrograph of the carbonized small spheres prepared in Comparative Example 2-3;

FIG. 10 shows a scanning electron micrograph of the silicon-carbon negative electrode material prepared in Comparative Example 2-4;

FIG. 11 shows a particle size distribution diagram of the silicon-carbon negative electrode material prepared in Example 2-1;

FIG. 12 shows an $N_2$ adsorption-desorption isotherm diagram of the silicon-carbon negative electrode material prepared in Example 2-1;

FIG. 13 shows an SEM image of the porous carbon material prepared in Example 3-1.

**Detailed Description of Embodiments**

Unless defined otherwise herein, scientific and technical terms used in conjunction with the present disclosure shall have the meanings commonly understood by one of ordinary skill in the art. The meanings and scope of terms shall be clear. However, in the event of any potential ambiguity, the definitions provided herein take precedence over any dictionary or foreign definitions. In the present disclosure, unless otherwise indicated, the use of "or" means "and/or". Furthermore, the term "comprise" and other forms thereof are used in a non-limiting sense.

The technical solutions in the present disclosure will be described clearly and completely below with reference to embodiments. Obviously, the described embodiments are some of, rather than all of, the embodiments of the present invention. Based on the embodiments of the present disclosure, all other embodiments obtained by those of ordinary skill in the art without creative efforts fall within the scope of protection of the present disclosure.

The features and performances of the present disclosure will be further described in detail below with reference to embodiments.

First, the present disclosure provides a negative electrode material, a preparation method therefor and the use thereof, specifically comprising the following.

The embodiments of the present disclosure further provide a negative electrode material comprising a porous substrate, a silicon element distributed within the pores of the porous substrate, and carbon coated on the surface of the porous substrate. The negative electrode material has a silicon content of 30 wt%-80 wt%, a resistivity of less than 5 $\Omega \cdot$cm, and a value of W > 8, where W = silicon content/resistivity, with the silicon content being in wt% and the resistivity being in $\Omega \cdot$cm.

In particular, the silicon content in the negative electrode material may be 30 wt%, 40 wt%, 50 wt%, 60 wt%, 70 wt%, 80 wt%, or any value between 30 wt% and 80 wt% and the increase in the silicon content of the negative electrode material is beneficial for improving the capacity of the negative electrode material. However, because silicon as a negative electrode material undergoes severe volume expansion and contraction during lithium intercalation and deintercalation, which affects the cycling performance of the negative electrode material, the silicon content should not be excessively high.

In the preparation of a negative electrode material according to the prior art, a large amount of silicon is present on the surface of the negative electrode material, i.e. the formation of floating silicon. The porous substrate cannot buffer the volume expansion of the floating silicon during lithium storage in silicon, and the presence of the floating silicon also affects the uniformity of carbon coating, which is detrimental to the cycling performance of the negative electrode material.

In order to maximize the capacity while ensuring the cycling performance of the negative electrode material, in the negative electrode material of the present disclosure, the presence of the floating silicon is minimized and the silicon is distributed in the pores of the porous substrate, and the pore structure of the porous substrate is utilized to suppress the volume expansion of silicon during the intercalation and de-intercalation of lithium, thereby improving the cycling performance of the negative electrode material.

In the embodiments of the present disclosure, the resistivity of the material increases as the content of the floating silicon increases. In this embodiment, the resistivity of the negative electrode material can specifically be less than 1 $\Omega \cdot$cm, 1 $\Omega \cdot$cm, 2 $\Omega \cdot$cm, 3 $\Omega \cdot$cm, 4 $\Omega \cdot$cm, 5 $\Omega \cdot$cm, or any value of less than 5 $\Omega \cdot$cm. The larger the W, the lower the proportion of floating silicon. In this embodiment, the value of W of the negative electrode material can specifically be 8, 9, 10, 20, more than 20 or any value of more than 8.

According to the present disclosure, the porous substrate is further coated with carbon, which is beneficial to further alleviate the volume expansion of the negative electrode material during lithium intercalation, while improving the conductivity. In some embodiments, the content of the carbon coating layer in the silicon-carbon composite negative electrode material is 0.5 wt%-10 wt%.

In an optional embodiment, the specific surface area of the negative electrode material is 4 m$^2$/g - 9 m$^2$/g, specifically 4 m$^2$/g, 5 m$^2$/g, 6 m$^2$/g, 7 m$^2$/g, 8 m$^2$/g, 9 m$^2$/g or any value between 4 m$^2$/g and 9 m$^2$/g. The increase in specific surface area enables the increase of the number of active sites for the intercalation and de-intercalation of lithium, which is beneficial for the intercalation and de-intercalation of lithium. However, an excessively large specific surface area is not conducive to improving the cycling performance of the negative electrode material.

In an optional embodiment, the Dv50 of the negative electrode material is 1 $\mu$m-15 $\mu$m, specifically 1 $\mu$m, 3 $\mu$m, 5 $\mu$m, 7 $\mu$m, 9 $\mu$m, 11 $\mu$m, 13 $\mu$m, 15 $\mu$m or any value between 1 $\mu$m and 15 $\mu$m. If the particle size of the negative electrode material is too large, the path of the intercalation and de-intercalation of lithium at the central position will increase and the difficulty of the intercalation and de-intercalation of lithium will increase.

In an optional embodiment, the tap density of the negative electrode material is 0.7 g/cm$^3$-1.5 g/cm$^3$, specifically 0.7 g/cm$^3$, 0.8 g/cm$^3$, 0.9 g/cm$^3$, 1.0 g/cm$^3$, 1.1 g/cm$^3$, 1.2 g/cm$^3$, 1.3 g/cm$^3$, 1.4 g/cm$^3$, 1.5 g/cm$^3$ or any value between 0.7 g/cm$^3$ and 1.5 g/cm$^3$. Increasing the tap density is beneficial for improving the energy density of the material, but an excessively high tap density leads to reduced pore structure and increased difficulty in the intercalation and de-intercalation of lithium.

The embodiments of the present disclosure provide a method for preparing the negative electrode material of any one of the preceding embodiments, comprising:

low-temperature adsorption, involving placing a porous substrate in an environment containing a silicon source gas and adsorbing the silicon source gas;
high-temperature pyrolysis, involving heating the porous substrate adsorbed with the silicon source gas to decompose the silicon source gas, so as to obtain a porous substrate supported with nano-silicon within a pore structure; and
coating treatment, involving forming a carbon coating layer on the porous substrate supported with nano-silicon within the pore structure, to obtain the negative electrode material.

In the method for preparing the negative electrode material disclosed in the present disclosure, firstly, a silicon source is adsorbed into the cavities of a porous substrate by means of the adsorption effect of the porous substrate on the silicon source; and the temperature inside the furnace is then raised to decompose the silane in the cavities, resulting in the deposition of nano-silicon particles in the cavities, such that the impact of the volume expansion during lithium storage in silicon on the cycling performance of the negative electrode material is reduced.

While the silicon source decomposes inside the cavities, gas is released. As the gas escapes, a cavity structure is formed again within the deposited silicon, which provides sufficient buffer space for the volume expansion of the nano-silicon particles during the subsequent the intercalation and de-intercalation of lithium, so as to improve the stability of the negative electrode material.

The silicon deposition mode of "adsorption first, then decomposition" disclosed in the present disclosure enables the significant improvement of the deposition efficiency and the utilization rate of the silicon source under equivalent silicon deposition amounts or identical deposition times. Moreover, the lithium-ion battery assembled with the silicon-carbon negative electrode material prepared by the preparation method disclosed in the present disclosure has more excellent cycling stability and initial coulombic efficiency.

In an optional embodiment, the low-temperature adsorption step is carried out in a low-temperature adsorption apparatus, and is completed when the silicon source gas is discharged from the tail gas outlet of the low-temperature adsorption apparatus during the low-temperature adsorption process. The low-temperature adsorption apparatus can be a deposition furnace, or other devices capable of achieving low-temperature adsorption. When the gas leaving the tail gas outlet contains the silicon source gas, it indicates that the adsorption of silicon source gas by the porous substrate has reached saturation. At this point, if the silicon source gas continues to be introduced, some of the silicon source gas will be adsorbed onto the surface of the porous substrate, and during the subsequent high-temperature pyrolysis step, the silicon obtained from the decomposition will deposit on the surface of the porous substrate to form floating silicon, leading to an increase in the content of floating silicon.

In an optional embodiment, the low-temperature adsorption temperature is 25°C-200°C, specifically 25°C, 50°C, 75°C, 100°C, 125°C, 150°C, 175°C, 200°C or any value between 25°C and 200°C; The low-temperature adsorption pressure is 0.0001 KPa-0.3 Kpa, specifically any value between 0.0001 KPa and 0.3 Kpa or 0.0001 Kpa, 0.001 Kpa, 0.01 Kpa, 0.1 Kpa, 0.2 Kpa, or 0.3 Kpa. The low-temperature adsorption time is 1 h-30 h, specifically 1 h, 3 h, 5 h, 10 h, 15 h, 20 h, 30 h or any value between 1 h and 30 h. More optionally, the low-temperature adsorption is carried out at temperature of 30°C-150°C and a pressure of 0.001 KPa-0.1 KPa for a time of 2 h-25 h.

Maintaining a lower pressure during the low-temperature adsorption, is favourable to promote the adsorption of a silicon source gas by the porous substrate, thereby improving adsorption efficiency. When the pressure increases, gas molecules accumulate on the surface of the porous material and cannot effectively diffuse into the cavities of the porous substrate. As a result, surface floating silicon forms on the surface of the substrate, affecting the cycling stability of the silicon-carbon negative electrode material.

A relatively low temperature in the low-temperature adsorption step is conducted at a relatively low temperature such that the movement and diffusion of the silicon source gas molecules can be effectively reduced and the adsorption effect of the porous substrate on the silicon source gas can be improved. However, if the temperature is too low, the gas molecules move too slowly and become ununiformly dispersed after entering the porous substrate, leading to the agglomeration of the nano-silicon particles obtained from subsequent pyrolysis, which affects the stability of the negative electrode material.

In an optional embodiment, the silicon source is selected from at least one of silane, disilane, dichlorosilane, and trichlorosilane.

In an optional embodiment, the silicon source-containing gas further comprises an inert gas, and the volume fraction of the silicon source in the silicon source-containing gas is between 50 vol%-99 vol%. The presence of an inert gas contributes to increased safety.

In an optional embodiment, the high-temperature pyrolysis step is carried out in a high-temperature pyrolysis apparatus, and is completed when the gas discharged from the tail gas outlet of the high-temperature pyrolysis apparatus is free of hydrogen during the high-temperature pyrolysis process. The decomposition of the silicon source gas results in hydrogen release, and if there is no hydrogen discharged from the tail gas outlet, the high-temperature pyrolysis step can be regarded as completed.

In an optional embodiment, the high-temperature pyrolysis temperature is 300°C-800°C, specifically 300°C, 400°C, 500°C, 600°C, 700°C, 800°C or any value between 300°C and 800°C; The high-temperature pyrolysis pressure is 0.01 Kpa-5 Kpa, specifically 0.01 Kpa, 0.1 Kpa, 1 Kpa, 2 Kpa, 3 Kpa, 4 Kpa, 5 Kpa or any value between 0.01 Kpa and 5 Kpa. The high-temperature pyrolysis time is 1 h-50 h; specifically 1 h, 3 h, 5 h, 10 h, 20 h, 30 h, 40 h, 50 h or any value between 1 h and 50 h. More optionally, the high-temperature pyrolysis is carried out at a temperature of 400°C-700°C and a pressure of 0.01 Kpa-3 KPa for a time of 1 h-40 h. On the one hand, the high-temperature pyrolysis step requires a relatively high temperature to ensure the complete pyrolysis of the silicon source gas; on the other hand, it must still be maintained at a relatively low pressure to ensure that the adsorbed silicon source gas continues to remain within the cavities of the porous substrate.

In an optional embodiment, the porous substrate satisfies at least one of the following A-G.

A, the SPAN value < 1.5, specifically 1.5, 1.2, 0.9, 0.6, 0.3, or any value of < 1.5. The relatively uniform particle size distribution of the porous substrate is conducive to obtaining a negative electrode material with uniform particle size distribution.

B, Dv50 is 2 μm-20 μm, specifically 2 μm, 5 μm, 10 μm, 15 μm, 20 μm or any value between 2 μm and 20 μm; The particle size of the porous substrate affects the particle size of the negative electrode material, so the particle size of the porous substrate also needs to be reasonably selected.

C, the porous substrate has a specific surface area of 400 m²/g-2000 m²/g, specifically 400 m²/g, 800 m²/g, 1200 m²/g, 1600 m²/g, 2000 m²/g or any value between 400 m²/g and 2000 m²/g; optionally 900 m²/g-2000 m²/g. The increase in the specific surface area of the porous substrate is favourable to the increase in the amount of the adsorbed silicon source gas, but the excessively large specific surface area will lead to an excessive silicon content in the negative electrode material, which is not conducive to improving the cycling performance. In addition, the specific surface area of the porous substrate is partially inherited to the negative electrode material, which in turn affects the specific surface area of the negative electrode material.

D, the average pore size is 1.2 nm to 7.0 nm, specifically 1.2 nm, 3 nm, 5 nm, 7.0 nm or any value between 1.2 nm and 7.0 nm, optionally 1.5 nm-5.0 nm. A too large pore size is not conducive to the uniform dispersion of the deposited silicon; a too small pore size cannot accommodate the volume expansion of silicon after lithium intercalation. Both are not conducive to improving the cycling performance of the negative electrode material.

E, the pore volume is 0.3 cm³/g - 2.0 cm³/g, specifically 0.3 cm³/g, 0.6 cm³/g, 0.9 cm³/g, 1.2 cm³/g, 1.5 cm³/g, 2.0 cm³/g or any value between 0.3 cm³/g and 2.0 cm³/g, optionally, 0.5 cm³/g-1.8 cm³/g. If the pore volume is too large, the strength of the porous substrate will be relatively low; if the pore volume is too small, it cannot accommodate sufficient silicon source gas, resulting in a decrease in the silicon content in the negative electrode material.

F, the pore size concentration is 0.3-6.0, specifically 0.3, 1, 2, 4, 6.0 or any value between 0.3-6.0, calculated as $(P_V 90 - P_V 10)/P_V 50$, optionally 0.3-8, where PV refers to the pore volume. The relatively uniform pore volume is conducive to the relatively uniform adsorption of silicon in the cavities of the porous substrate, which in turn facilitates the uniform distribution of the deposited silicon in the porous substrate.

G, the porous substrate is selected from at least one of a porous carbon, porous metal oxides, coordination polymers, porous metals, and porous ceramics, optionally a porous carbon. The porous carbon substrate can provide a certain capacity while adsorbing the silicon source gas, and has a good stability.

In an optional embodiment, the coating treatment comprises introducing a carbon-containing gas source into a reactor where a porous substrate supported with nano-silicon within the pore structure is placed for carbon deposition to form a carbon coating layer.

Optionally, the temperature of the carbon deposition is 300°C-1300°C, specifically 300°C, 600°C, 900°C, 1100°C, 1300°C or any value between 300°C and 1300°C, and the carbon deposition time is 1 h-10 h, specifically 1 h, 3 h, 5 h, 7 h, 10 h or any value between 1 h and 10 h; Optionally, the temperature of the carbon deposition is 400°C-1000°C, more optionally 400°C-600°C.

Optionally, the carbon-containing gas source comprises a carbon source gas selected from alkane gases with a cracking temperature within the carbon deposition temperature range.

Optionally, the carbon-containing gas source further comprises an inert gas.

Optionally, the volume fraction of the carbon source gas in the carbon-containing gas source is 50 vol%-99 vol%.

The embodiments of the present disclosure further provide a negative electrode plate of the present disclosure comprising the negative electrode material of any one of the preceding embodiments or the negative electrode material prepared by the method of any one of the preceding embodiments.

The embodiments of the present disclosure further provide a secondary battery of the present disclosure comprising the negative electrode plate of the preceding embodiments. The secondary battery has excellent cycling stability and possesses both high reversible specific capacity and initial Coulombic efficiency.

The embodiments of the present disclosure further provide an electrical device of the present disclosure, comprising the secondary battery of the preceding embodiments.

Next, the present disclosure provides a silicon-carbon composite material, a preparation method therefor and the use thereof, specifically comprising the following.

The embodiments of the present disclosure provide a silicon-carbon composite material, comprising active material particles, wherein the active material particles comprise a spherical porous carbon skeleton and nano-silicon particles.

A strength of the silicon-carbon composite material is defined by the following formula:

$$P = \left(1 - \frac{S_2 - S_1}{S_1}\right) \times 100\%$$

wherein $P$ represents the strength of the silicon-carbon composite material, in %; $S_2$ represents the specific surface area of the silicon-carbon composite material after compression, in m$^2$/g; and $S_1$ represents the specific surface area of the silicon-carbon composite material before compression, in m$^2$/g.

In the present disclosure, a silicon-carbon composite material with a relatively high sphericity is prepared by depositing nano-silicon particles into the pores of a spherical porous carbon skeleton by chemical deposition. Meanwhile, the silicon-carbon composite material is subjected to a compaction treatment. The silicon-carbon composite material after compression is observed by electron microscopy characterization that most particles undergo particle breakage, with through-particle cracks being dominant, such that the specific surface area of the particles increases. That is, the degree of particle breakage can be quantified by characterizing the specific surface area of the particles before and after compression. Moreover, it is found that the linear correlation between the compaction density and the applied pressure and the specific surface area after compression is good, so the rate of change in specific surface area before and after compression is used to characterize strength.

In an optional embodiment, the specific surface area of the silicon-carbon composite material is 2-5 m$^2$/g, for example, 2 m$^2$/g, 2.5 m$^2$/g, 3 m$^2$/g, 3.5 m$^2$/g, 4 m$^2$/g, 4.5 m$^2$/g, or 5 m$^2$/g.

In an optional embodiment, when compressed at a pressure of 450 MPa for 30 s, the silicon-carbon composite material has a strength of 90% or more, for example, 90%, 91%, 92%, 93%, 94%, 95%, 96%, 97%, 98%, or 99%.

In an optional embodiment, the sphericity of the spherical porous carbon is ≥ 80%, for example, 80%, 81%, 82%, 83%, 84%, 85%, 86%, 87%, 88%, 89%, 90%, 91%, 92%, 93%, 94%, or 95%.

In an optional embodiment, the spherical porous carbon contains uniformly distributed micropores and/or mesopores inside.

In an optional embodiment, the total volume of the pore volume of the spherical porous carbon with an average pore size of less than 4 nm is ≥ 0.7 cm$^3$/g, for example, 0.7 cm$^3$/g, 0.75 cm$^3$/g, 0.8 cm$^3$/g, 0.85 cm$^3$/g, 0.9 cm$^3$/g, or 1.0 cm$^3$/g.

In an optional embodiment, the mesoporosity of the spherical porous carbon is < 20%, for example, 19%, 18%, 17%, 16%, 15%, 14%, 12%, 10%, 8%, 6%, 4%, 2%, or 1%.

In an optional embodiment, the microporosity of the spherical porous carbon is > 80%, for example, 81%, 82%, 83%, 84%, 85%, 86%, 87%, 88%, 89%, 90%, 91%, 92%, 93%, 94%, 95%, 96%, 97%, 98%, or 99%.

In an optional embodiment, the particle size of the spherical porous carbon is 1-60 μm, for example 1 μm, 5 μm, 10 μm, 15 μm, 20 μm, 25 μm, 30 μm, 35 μm, 40 μm, 45 μm, 50 μm, 55 μm, or 60 μm.

In an optional embodiment, the D$_{10}$ particle size of the spherical porous carbon is 3-7 μm, for example 3 μm, 3.5 μm, 4 μm, 4.5 μm, 5 μm, 5.5 μm, 6 μm, 6.5 μm, or 7 μm.

In an optional embodiment, the Dv50 particle size of the spherical porous carbon is 8-13 μm, for example 8 μm, 9 μm, 10 μm, 11 μm, 12 μm, or 13 μm.

In an optional embodiment, the D$_{90}$ particle size is 15-40 μm, for example 15 μm, 18 μm, 20 μm, 22 μm, 24 μm, 26 μm, 28 μm, 30 μm, 32 μm, 34 μm, 36 μm, 38 μm, or 40 μm.

In an optional embodiment, the nano-silicon particles are deposited in the pores of the spherical porous carbon.

In an optional embodiment, the content of silicon in the silicon-carbon composite material is 40-60%, for example, 40%, 42%, 44%, 46%, 48%, 50%, 52%, 54%, 56%, 58%, or 60%.

In an optional embodiment, the specific capacity of the silicon-carbon composite material is > 1500 mAh/g, for example, 1501 mAh/g, 1505 mAh/g, 1510 mAh/g, 1550 mAh/g, 1600 mAh/g, 1650 mAh/g, 1700 mAh/g, 1750 mAh/g, 1780 mAh/g, 1790 mAh/g, 1800 mAh/g, 1820 mAh/g, 1830 mAh/g, 1840 mAh/g, 1850 mAh/g, 1860 mAh/g, 1870 mAh/g, 1880 mAh/g, 1890 mAh/g, or 1900 mAh/g, preferably > 1800 mAh/g.

In an optional embodiment, the capacity retention rate after 200 cycles of the silicon-carbon composite material is > 90%, for example, 90%, 92%, 94%, 95%, 96%, 98%, or 99%.

The embodiments of the present disclosure further provide a method of the present disclosure for preparing the silicon-carbon composite material of the preceding embodiments, comprising the following steps:

mixing low-carbon-source microspheres, a high-carbon-source resin, and a solvent to obtain a mixed solution;
subjecting the mixed solution to a spray drying treatment to obtain small spherical particles;
successively subjecting the small spherical particles to a carbonization treatment and an activation treatment to obtain a spherical porous carbon; and
performing a vapor deposition on the spherical porous carbon to obtain the silicon-carbon composite material.

According to the present disclosure, a spherical carbon with a high carbon content and a good sphericity is prepared by mixing microspheres with a low synthetic carbon content and a resin liquid with a high carbon source, followed by spray drying to form small spheres, and adjusting and controlling the particle size of the spherical carbon by adjusting the curing conditions during spray drying. Furthermore, pores are formed by chemical and physical methods, and during the carbonization and activation pore-forming processes, no hollow phenomenon occurs, and no large internal pores that would cause a reduction in strength are formed, such that a spherical porous carbon with a high sphericity and a high strength is prepared. Finally, a silicon-carbon composite material with a high sphericity is prepared by depositing nano-silicon particles into the pores of the spherical porous carbon skeleton by vapor deposition. In addition, A higher sphericity prevents the poor compression resistance due to many edges and corners during the rolling process, such that the continuous formation of the solid electrolyte interface (SEI) film, the capacity attenuation, and the poor cycling performance caused by a low strength can be alleviated. In particular, when compressed at a pressure of 450 MPa for 30 s, the spherical silicon-carbon composite material has a strength of 90% or more, but the irregular silicon-carbon composite material has a strength of less than 90%.

In an optional embodiment, the residual carbon content of the low-carbon-source microspheres is ≤ 40%, for example, 40%, 35%, 30%, 25%, 20%, 15%, 10%, or 5%c.

In an optional embodiment, the residual carbon content of the high-carbon-source resin is 50-70%, for example, 50%, 55%, 60%, 65%, or 70%.

In an optional embodiment, the low-carbon-source microspheres comprise any one or a combination of at least two of polystyrene microspheres, polylactic acid microspheres, or polyvinylidene fluoride microspheres. The high-carbon-source resin is a phenolic resin and/or a phenolic resin derivative.

In an optional embodiment, the mass ratio of the low-carbon-source microspheres to the high-carbon-source resin is 1 : (1-5), for example, 1 : 1, 1 : 1.5, 1 : 2, 1 : 2.5, 1 : 3, 1 : 3.5, 1 : 4, 1 : 4.5, or 1 : 5.

In an optional embodiment, the solvent comprises an alcohol solvent, preferably ethanol.

In an optional embodiment, the solid content of the mixed solution is 30-60 wt%, for example, 30 wt%, 32 wt%, 34 wt%, 36 wt%, 38 wt%, 40 wt%, 42 wt%, 44 wt%, 46 wt%, 48 wt%, 50 wt%, 52 wt%, 54 wt%, 56 wt%, 58 wt%, or 60 wt%.

In an optional embodiment, the mixed solution further comprises 5-10 wt% of carbon tubes, for example, 5 wt%, 6 wt%, 7 wt%, 8 wt%, 9 wt%, or 10 wt%.

It should be noted that in the present disclosure, in addition to the combination of the microspheres with the high-carbon-source resin, a certain amount of carbon tubes may be added to further increase the conductivity of the silicon-carbon composite material.

In an optional embodiment, the mixed solution further comprises a conductive polymer comprising any one or a combination of at least two of polyacetylene, polythiophene, polypyrrole, or polyaniline.

It should be noted that in the present disclosure, in addition to the combination of the microspheres with the high-carbon-source resin, an amount of a conductive polymer may be added to introduce active defects, thus further increasing the conductivity of the silicon-carbon composite material.

In an optional embodiment, the spray drying treatment process parameters comprise: a centrifugal disc rotation speed of 24000-30000 rpm; an inlet air temperature of 160-230°C; a feed rate of 1.2-4 L/h; and an induced draft fan frequency of 40-50 Hz.

In an optional embodiment, the centrifugal disc rotation speed is 24000-30000 rpm, for example 24000 rpm, 25000 rpm, 26000 rpm, 27000 rpm, 28000 rpm, 29000 rpm, or 30000 rpm.

In an optional embodiment, the inlet air temperature is 160-230°C, for example 160°C, 170°C, 180°C, 190°C, 200°C, 210°C, 220°C, or 230°C.

In an optional embodiment, the feed rate is 1.2-4 L/h, for example, 1.2 L/h, 1.4 L/h, 1.6 L/h, 1.8 L/h, 2 L/h, 2.2 L/h, 2.4 L/h, 2.6 L/h, 2.8 L/h, 3 L/h, 3.2 L/h, 3.4 L/h, 3.6 L/h, 3.8 L/h, or 4 L/h.

In an optional embodiment, the induced draft fan frequency is 40-50 Hz, for example, 40 Hz, 42 Hz, 44 Hz, 46 Hz, 48 Hz, or 50 Hz.

In an optional embodiment, the temperature of the carbonization treatment is 400-900°C, for example, 400°C, 450°C, 500°C, 550°C, 600°C, 620°C, 640°C, 660°C, 680°C, 700°C, 720°C, 740°C, 760°C, 780°C, 800°C, 820°C, 840°C, 860°C, 880°C, or 900°C.

In an optional embodiment, the carbonization treatment time is 3 to 10 h, for example, 3 h, 4 h, 5 h, 6 h, 7 h, 8 h, 9 h, or 10 h.

In an optional embodiment, the activation treatment comprises physical activation and/or chemical activation.

In an optional embodiment, the activation treatment is carried out by means of physical activation.

In an optional embodiment, the physical activation step involves introducing an activation gas into the carbon microspheres obtained after the carbonization treatment for physical activation.

In an optional embodiment, the activation gas comprises carbon dioxide and/or water vapor.

In an optional embodiment, the temperature of the physical activation is 800-1000°C, for example, 800°C, 820°C, 840°C, 860°C, 880°C, 900°C, 920°C, 940°C, 960°C, 980°C, or 1000°C.

In an optional embodiment, the time of the physical activation is 7-20 h, for example, 7 h, 8 h, 9 h, 10 h, 12 h, 14 h, 16 h, 18 h, or 20 h.

In an optional embodiment, the activation treatment is followed by a further step of impurity removal, involving subjecting the activated porous carbon microspheres to acid washing for impurity removal, followed by water washing and then drying.

In an optional embodiment, the acid washing is carried out using 5-8 wt% of a hydrochloric acid solution, for example, 5 wt%, 5.5 wt%, 6 wt%, 6.5 wt%, 7 wt%, 7.5 wt%, or 8 wt%.

In an optional embodiment, the temperature of the acid washing is 20-100°C, for example, 20°C, 25°C, 30°C, 35°C, 40°C, 45°C, 50°C, 55°C, 60°C, 65°C, 70°C, 75°C, 80°C, 85°C, 90°C, 95°C, or 100°C.

In an optional embodiment, the time of the acid washing is 1-24 h, for example, 1 h, 2 h, 4 h, 6 h, 8 h, 10 h, 12 h, 14 h, 16 h, 18 h, 20 h, 22 h, or 24 h.

In an optional embodiment, the temperature of the drying is 70-90°C, for example, 70°C, 75°C, 80°C, 85°C, or 90°C.

In an optional embodiment, the deposition gas source for the vapor deposition is a mixed gas of a protective gas and a silicon source gas.

In an optional embodiment, the protective gas comprises any one or a combination of at least two of nitrogen, neon, argon, krypton, xenon, or radon.

In an optional embodiment, the silicon source gas comprises any one or a combination of at least two of silane, disilane, dichlorosilane, or trichlorosilane.

In an optional embodiment, the volume ratio of the protective gas to the silicon source gas is (10-30) : (70-90);

wherein "10-30" may be, for example, 10, 12, 15, 18, 20, 22, 25, 28, or 30;
and wherein "70-90" can be, for example, 70, 72, 75, 78, 80, 82, 85, 88, or 90.

In an optional embodiment, the ratio of the deposition amount in the vapor deposition to the feed material is (0.4-1.5) : 1, for example, 0.4 : 1, 0.5 : 1, 0.6 : 1, 0.7 : 1, 0.8 : 1, 0.9 : 1, 1 : 1, 1.1 : 1, 1.2 : 1, 1.3 : 1, 1.4 : 1, or 1.5 : 1.

In an optional embodiment, the temperature of the vapor deposition is 300-800°C, for example, 300°C, 350°C, 400°C, 450°C, 500°C, 550°C, 600°C, 650°C, 700°C, 750°C, or 800°C.

In an optional embodiment, the time of the vapor deposition is 5-10 h, for example, 5 h, 6 h, 7 h, 8 h, 9 h, or 10 h.

In an optional embodiment, the method for preparing a silicon-carbon composite material comprises the steps of

S1, preparation of a low-carbon-source microsphere/high-carbon-source resin mixed solution:
mixing the low-carbon-source microspheres and the high-carbon-source resin, and dispersing the mixture in a solvent to obtain a mixed solution;
S2, spray drying:
subjecting the mixed solution obtained from S1 to a spray drying treatment to obtain small spherical particles having a sphericity of > 80%;
S3, carbonation treatment:
subjecting the small spherical particles obtained from S2 to a carbonization treatment under an inert atmosphere to obtain carbonized carbon microspheres;
S4, activation treatment:
subjecting the carbonized carbon microspheres obtained from S3 to an activation treatment to obtain porous carbon microspheres;
S5, impurity removal:
subjecting the porous carbon microspheres obtained from S4 to acid washing for impurity removal followed by water washing and drying; and
S6, chemical vapor deposition:
subjecting the porous carbon microspheres from impurity removal obtained from S5 to chemical vapor deposition to obtain the silicon-carbon composite material.

The embodiments of the present disclosure further provide the use of the silicon-carbon composite material of the preceding embodiments in the preparation of a negative electrode material for a battery.

The embodiments of the present disclosure provide a testing method of the present disclosure for the silicon-carbon composite material, the testing method comprising the steps of:

obtaining the specific surface area of the silicon-carbon composite material before compression, designated as S1;
subjecting the silicon-carbon composite material to a compaction treatment to break the sample, so as to test the specific surface area of the silicon-carbon composite material broken after the compression, designated as S2; and
calculating the rate of change in the specific surface area of the silicon-carbon composite material by the following formula I to characterize the strength of the silicon-carbon composite material.

The strength of the silicon-carbon composite material is defined by the following formula:

$$P = \left(1 - \frac{S_2 - S_1}{S_1}\right) \times 100\%$$

wherein $P$ represents the strength of the silicon-carbon composite material, in %; $S_2$ represents the specific surface area of the silicon-carbon composite material after compression, in m$^2$/g; and $S_1$ represents the specific surface area of the silicon-carbon composite material before compression, in m$^2$/g.

In the present disclosure, there is no limitation on test methods for the specific surface area of the silicon-carbon composite material. For example, the BET method can be selected for testing.

In the present disclosure, there is no limitation on the instruments for the compaction treatment of silicon-carbon composite materials, and as a preference, the compaction treatment is carried out using a compaction density meter.

In the present disclosure, by combining a compaction density meter with a specific surface area meter, the strength of the silicon-carbon composite negative electrode material is quantified by comparing the rate of change in the specific surface area before and after compression. The silicon-carbon material after compression is observed by electron microscopy characterization that most particles undergo particle breakage, with through-particle cracks being dominant, such that the specific surface area of the particles increases. That is, the degree of particle breakage can be quantified by characterizing the specific surface area of the particles before and after compression.

In an optional embodiment, the particle size distribution of the silicon-carbon powder also can be tested in accordance with the provisions of GB/T 19077 using a laser particle size analyser, and during which the particle size of the silicon-carbon composite material is tested, if two samples of the same type are compared, the D(50) can be controlled to be the same.

In an optional embodiment, the following conditions for performing compaction treatment to break up the sample must be satisfied: setting appropriate pressurization and depressurization displacements, holding pressure and holding time to ensure that the particles of the sample break under the same pressure (i.e., ensuring that the pressurization time and holding time enables the crushing of the sample).

In an optional embodiment, the specific process of the compaction treatment is as follows: an appropriate amount of silicon-carbon powder sample is weighed into the sample chamber of a compaction density meter; the compaction test conditions are set as follows: appropriate pressurization and depressurization displacements, holding pressure and holding time are set to ensure that the particles of the sample break under the same pressure (i.e., ensuring that the pressurization time and holding time enables the crushing of the sample); after the test is completed, the sample is withdrawn using an ejection rod, and the sample after compaction is collected; and the collected samples are mixed for testing.

In an optional embodiment, the rate of the compaction treatment is 8-12 mm/min, for example, 8 mm/min, 9 mm/min, 10 mm/min, 11 mm/min, or 12 mm/min, preferably, 10 mm/min.

In an optional embodiment, the holding time of the compaction treatment is 10-50 s, for example, 10 s, 15 s, 20 s, 25 s, 30 s, 35 s, 40 s, 45 s, or 50 s, preferably 30 s.

In an optional embodiment, the pressure of the compaction treatment is 450-500 MPa, for example, 450 MPa, 460 MPa, 470 MPa, 480 MPa, 490 MPa, or 500 MPa.

Finally, the present disclosure provides a method for preparing a porous carbon, the porous carbon, a negative electrode material, and a secondary battery, specifically comprising the following.

The embodiments of the present disclosure further provide a method for preparing a porous carbon, comprising:

granulation, involving drying and granulating a phenolic resin microsphere suspension to obtain a powder, wherein nano-carbon nanotubes are dispersed in the phenolic resin microspheres; and
carbonization, involving successively performing secondary curing, pre-oxidation, and carbonization on the powder to obtain the porous carbon.

In the embodiments of the present disclosure, the porous carbon is prepared using nano-scale carbon nanotubes. The good conductivity of the carbon nanotubes is helpful to improve the conductivity of the porous carbon, and the size of the carbon nanotubes has an important influence on the conductivity of the porous carbon. Generally, a continuous conductive path can be formed by increasing the length of the carbon nanotubes, which is more conducive to improving the conductivity of the porous carbon and the mechanical strength of the porous carbon. However, longer carbon nanotubes are prone to agglomeration and have a poorer dispersion stability, which is detrimental to the uniform distribution of carbon nanotubes in the suspension and thus is detrimental to the improvement of the conductivity of the porous carbon. Therefore, the use of nano-scale carbon nanotubes in the present disclosure is more conducive to increasing the conductivity of the porous carbon.

In an optional embodiment, the average length of the nano-carbon nanotubes is 20 nm-50 nm, specifically 20 nm, 30 nm, 40 nm, 50 nm, or any value between 20 nm and 50 nm; and the average aspect ratio is 1.5-5, specifically 1.5, 2, 2.5, 3, 3.5, 4, 4.5, 5 or any value between 1.5 and 5.

When the size of the nano-carbon nanotubes is within an appropriate range, it is conducive to the encapsulation of the nano-carbon nanotubes by phenolic resin microspheres. On the one hand, the encapsulation by the phenolic microspheres enables the inhibition of the agglomeration of the nano-carbon nanotubes, which is conducive to improve the stability of the dispersion of nano-carbon nanotubes. On the other hand, if the nano-carbon nanotubes are too large in size, they become difficult to be encapsulated by phenolic resin microspheres, which may affect the sphericity and pore structure of the subsequent porous carbon, and thus the electrical performance of the negative electrode material prepared from the porous carbon.

In an optional embodiment, the mass ratio of the nano-carbon nanotubes to the total mass of a phenolic raw material and an aldehyde raw material in the phenolic resin microsphere suspension is 1 : (1.5-10), specifically 1 : 1.5, 1 : 2, 1 : 2.5, 1 : 3, 1 : 3.5, 1 : 4, 1 : 4.5, 1 : 5, 1 : 5.5, 1 : 6, 1 : 6.5, 1 : 7, 1 : 7.5, 1: 8, 1 : 8.5, 1 : 9, 1 : 9.5, 1 : 10 or any value within the range of 1 : (1.5-10).

The introduction of nano-carbon nanotubes into phenolic resin microspheres is beneficial for improving the conductivity, but if the amount is too large, the uniformity of their distribution may be reduced, thereby affecting the electrical performance of the negative electrode material prepared from the porous carbon.

In an optional embodiment, a doping source is further dispersed in the phenolic resin microspheres, and the doping source comprises at least one of a germanium source and a tin source, the germanium source being selected from at least one of orthogermanate, metagermanate, germanium dihydroxide, and germanium tetrahydroxide, and the tin source being selected from at least one of tin chloride, tin nitrate, and tin sulphate.

The introduction of germanium or tin elements into the porous carbon is conducive to expanding the lattice size, thus facilitating the further improvement of the ionic conductivity and lowering the energy barrier, such that the intercalation and de-intercalation of lithium becomes easier, the generation of dead lithium is reduced, and thereby the initial Coulombic efficiency of the silicon-carbon negative electrode is improved. In addition, in this embodiment, the doping source is introduced into the phenolic resin microspheres, which is more conducive to the uniform distribution of the doping source in the porous carbon.

In an optional embodiment, a doping source is further dispersed in the phenolic resin microspheres, and the mass ratio of the nano-carbon nanotubes to the doping source in the phenolic resin microsphere suspension is (5-10) : 1, specifically, 5 : 1, 6 : 1, 7 : 1, 8 : 1, 9 : 1, 10 : 1 or any value between (5-10) : 1.

The introduction of a small amount of germanium or tin elements into the porous carbon is more favourable for the "local expansion" effect, thus facilitating the transport of Li ions. However, if the amount is excessive, it may produce the opposite effect, that is, the "narrow channel" effect becomes dominant, such that the energy barrier for Li ion transition is increased, the content of "dead lithium" is increased and consequently the electrical performance of the negative electrode material prepared from the porous carbon is affected.

In an optional embodiment, the method for preparing the phenolic resin microsphere suspension comprises: mixing a dispersant, a doping source, a phenolic raw material, an aldehyde raw material, and a catalyst with an aqueous solution with dispersed nano-carbon nanotubes, and maintaining the temperature to obtain a prepolymer solution; and mixing the prepolymer solution with a curing agent for a first curing to obtain the phenolic resin microsphere suspension.

In the mixing step, the purpose of the dispersant is to promote the uniform dispersion of the nano-carbon nanotubes and inhibit their agglomeration. Therefore, it is generally necessary to first add the dispersant to an aqueous solution, followed by a doping source, a phenolic raw material, an aldehyde raw material, and a catalyst.

In this embodiment, an aqueous solution with uniformly dispersed CNTs is first obtained, and then phenolic resin microspheres with nano-carbon nanotubes as the core are polymerized in this aqueous solution with uniformly dispersed CNTs, which is more conducive to ensuring the encapsulation of the nano-carbon nanotubes by the phenolic resin microspheres.

Preferably, the preparation method for the phenolic resin microsphere suspension satisfies at least one of the following features A-G:

A. the dispersant is selected from at least one of F127 (Poloxamer 407), PVA (polyvinyl alcohol), PEG (polyethylene glycol), and sodium silicate;
B. the aldehyde raw material is selected from at least one of formaldehyde and furfural;
C. the phenolic raw material selected from at least one of phenol and resorcinol, the mass ratio of the phenolic raw material to the aldehyde raw material being 1 : (0.8-1.2), specifically 1 : 0.8, 1 : 0.9, 1 : 1.0, 1 : 1.1, 1 : 1.2 or any value within the range of 1 : (0.8-1.2);
D. the catalyst is selected from at least one of sodium hydroxide and lithium hydroxide, the ratio of the catalyst to the total mass of the phenolic raw material and the aldehyde raw material being 1 : (25-35); specifically 1 : 25, 1 : 27, 1 : 29, 1 : 31, 1 : 33, 1 : 35 or any value within the range of 1 : (25-35);
E. the holding time is 4 h-6 h, specifically 4 h, 5 h, 6 h or any value between 4 h-6 h; and the temperature is 75°C-85°C, specifically 75°C, 80°C, 85°C or any value between 75°C-85°C;

F. the curing agent is selected from at least one of hexamethylenetetramine and aqueous ammonia, the ratio of the curing agent to the total mass of the phenolic raw material and the aldehyde raw material being 1 : (11-15), specifically 1 : 11, 1 : 12, 1 : 13, 1 : 14, 1 : 15 or any value within the range of 1 : (11-15); and

G. the temperature of the first curing is 90°C-95°C, specifically 90°C, 93°C, 95°C or any value between 90°C-95°C, and the time of the first curing is 2 h-8 h, specifically 2 h, 5 h, 8 h or any value between 2 h and 8 h.

The pore structure of the porous carbon, among others are adjusted by selecting the raw materials for synthesizing a phenolic resin and the synthesis conditions thereof, wherein the curing enables the cross-linked polymerized nanospheres to transform into solid phenolic resin nanospheres.

In an optional embodiment, the method for preparing the aqueous solution with dispersed nano-carbon nanotubes comprises: subjecting a mixed solution of nano-carbon nanotubes and water to ultrasonic stirring to obtain the aqueous solution with dispersed nano-carbon nanotubes. The preparation method for the aqueous solution with dispersed nano-carbon nanotubes satisfies at least one of the following features a-c:

a. the ultrasonic frequency is 50 Hz-70 Hz, specifically 50 Hz, 60 Hz, 70 Hz or any value between 50 Hz and 70 Hz; the stirring rate is 50 rpm-200 rpm, specifically 50 rpm, 100 rpm, 150 rpm, 200 rpm or any value between 50 rpm and 200 rpm; and the ultrasonic stirring time is 30 min-60 min, specifically 30 min, 40 min, 50 min, 60 min or any value between 30 min and 60 min, and the simultaneous application of ultrasound and stirring is conducive to the dispersion of nano-carbon nanotubes and the maintenance of the stability of the aqueous solution;

b. the solid content of the aqueous solution with dispersed nano-carbon nanotubes is 0.1 wt%-10 wt%, specifically 0.1 wt%, 0.5 wt%, 1 wt%, 2 wt%, 3 wt%, 4 wt%, 5 wt%, 6 wt%, 7 wt%, 8 wt%, 9 wt%, 10 wt% or any value between 0.1 wt% and 10 wt%, which is conducive to the dispersion of the nano-carbon nanotubes and the maintenance of the stability of the aqueous solution; and

c. the nano-carbon nanotubes being obtained by ball-milling a carbon nanotube raw material, the ball-milling parameters including: a ball-to-material ratio of (20-50) : 1, specifically 20 : 1, 30 : 1, 40 : 1, 50 : 1 or any value within the range of (20-50) : 1, the ball mill rotation speed is 500 rpm-2000 rpm, specifically 500 rpm, 1000 rpm, 1500 rpm, 2000 rpm or any value between 500 rpm and 2000 rpm, and the gas is an inert gas atmosphere. First, the carbon nanotube raw material is ball-milled to obtain namo-carbon nanotubes with a suitable particle size, which helps improve the uniformity and stability of the dispersion of the carbon nanotube in the aqueous solution and is also more favourable for the encapsulation of the nano-carbon nanotubes during the subsequent phenolic resin synthesis.

In an optional embodiment, a mixed solution of a phenolic resin microsphere suspension and a water-soluble binder is spray dried to obtain the powder, the spray drying parameters comprising: the inlet air temperature is 160°C-200°C, specifically, 160°C, 170°C, 180°C, 190°C, 200°C or any value between 160°C and 200°C; the outlet air temperature is 80°C - 120°C, specifically 80°C, 90°C, 100°C, 110°C, 120°C or any value between 80°C-120°C; the feed rate is 100 mL/h-300 mL/h, specifically, 100 mL/h, 200 mL/h, 300 mL/h or any value between 100 mL/h and 300 mL/h; and the centrifugal atomization disc rotation speed is 23000 rpm to 27000 rpm, specifically, 23000 rpm, 25000 rpm, 27000 rpm, or any value between 23000 rpm and 27000 rpm.

Spray drying enables the simultaneous drying and granulation, which is beneficial for improving the efficiency. Furthermore, spray drying is conducive to improving the sphericity of powder, which is conducive to improving the sphericity of the finally prepared porous carbon.

In an optional embodiment, the water-soluble binder is selected from at least one of a water-soluble resin, a starch, a dextrin and a polyvinyl alcohol;

and/or the volume ratio of the phenolic resin microsphere suspension to the water-soluble binder is 1 : (0.5-4), specifically, 1 : 0.5, 1 : 1, 1 : 2, 1 : 3, 1 : 4 or any value within the range of 1 : (0.5-4).

The addition of the binder enables the viscosity of the slurry to be adjusted to a reasonable range suitable for spray drying. In addition, the amount and type of water-soluble binders will affect the particle size of the powder, the pore structure of the porous carbon, etc.

In an optional embodiment, the temperature of the second curing is 100°C-140°C, specifically, 100°C, 110°C, 120°C, 130°C, 140°C or any value between 100°C and 140°C, and the time of the second curing is 1 h - 4 h, specifically, 1 h, 2 h, 3 h, 4 h or any value between 1 h and 4 h;

This curing process, on the one hand, allow the moisture content of the material to be reduced and, on the other hand, is conducive to improving the crosslinking degree of the resin, which further affects the pore structure, thermal stability and mechanical strength of porous carbon.

In an optional embodiment, the temperature of the pre-oxidation is 280°C-320°C, specifically, 280°C, 290°C, 300°C, 310°C, 320°C or any value between 280°C and 320°C; the time of the pre-oxidation is 1 h-5 h, specifically, 1 h, 2 h, 3 h, 4 h, 5 h or any value between 1 h and 5 h; and the heating rate of the pre-oxidation is 1°C/min-5°C/min, specifically, 1°C/min, 2°C/min, 3°C/min, 4°C/min, 5°C/min or any value between 1°C/min and 5°C/min. At the pre-oxidation temperature, the cross-linking degree of the resin is further improved, such that the stability of the porous carbon is further improved and more porous structures are formed.

In an optional embodiment, the temperature of the carbonization is 800°C-1000°C, specifically, 800°C, 900°C, 1000°C, or any value between 800°C and 1000°C, and the time of the carbonization is 4 h-8 h, specifically, 4 h, 5 h, 6 h, 7 h, 8 h or any value between 4 h and 8 h, and the heating rate of the carbonization is 4°C/min-6°C/min, specifically, 4°C/min, 5°C/min, 6°C/min or any value between 4°C/min and 6°C/min.

During the carbonization process, the organic components in the phenolic resin are decomposed, leaving behind a carbon skeleton and forming a porous carbon, wherein a higher pyrolysis temperature facilitates the formation of a more stable carbon skeleton and a more developed pore structure.

In an optional embodiment, the method further comprises activating the porous carbon with an activating agent to obtain an activated porous carbon, wherein the activation temperature is 700°C-1100°C, specifically, 700°C, 800°C, 900°C, 1000°C, 1100°C or any value between 700°C and 1100°C, the activation time is 2 h-30 h, specifically 2 h, 5 h, 10 h, 15 h, 20 h, 25 h, 30 h or any value between 2 h and 30 h, and the mass ratio of the porous carbon to the activating agent is 1 : (0.5-4), specifically, 1 : 0.5, 1 : 1, 1 : 2, 1 : 3, 1 : 4 or any value within the range of 1 : (0.5-4).

The activation step can affect the pore structure and specific surface area of the porous carbon, thereby facilitating the improvement of the performance of the negative electrode material prepared therefrom, wherein, the activating agents are divided into physical activating agents and chemical activating agents; the common physical activating agents include $CO_2$, water, etc., and the chemical activating agents include KOH, NaOH, phosphoric acid, etc.

The embodiments of the present disclosure further provide a porous carbon prepared by the preparation method of the preceding embodiments.

Preferably, the porous carbon satisfies at least one of the following (1) - (4):

(1) a pore volume in a range of 0.3 $cm^3$/g-1.4 $cm^3$/g;
(2) a specific surface area in a range of 800 $m^2$/g-2600 $m^2$/g;
(3) an average pore size of 1.65 nm-3.02 nm; and
(4) the particle size Dv50 in a range of 4 $\mu$m-30 $\mu$m.

The porous carbon satisfying the above requirements is conducive to improving the performance of the negative electrode material prepared therefrom.

The embodiments of the present disclosure further provide a negative electrode material comprising the porous carbon of the preceding embodiments and silicon and/or carbon distributed on the porous carbon.

In some embodiments, the prepared porous carbon is placed in a deposition furnace for CVD vapor deposition to obtain a silicon-carbon material, wherein the furnace temperature is 400°C-800°C, the silicon source is one or two of silane, disilane, and trichlorosilane, and the silane deposition time is 2 h-12 h. After the deposition is completed, a carbon source is introduced for vapor-phase coating, wherein the carbon source is one or two of methane, acetylene, and ethylene, the carbon coating layer has a thickness of 1-10 nm, and relative to the final silicon-carbon negative electrode material, the carbon coating layer accounts for 1-5% by mass, and the nano-silicon particles account for 30-80% by mass.

The embodiments of the disclosure further provide a secondary battery comprising the negative electrode material of the preceding embodiments.

The features and performances of a negative electrode material, a preparation method therefor, and the use thereof in the present disclosure will be further described in detail below with reference to examples.

Example 1-1

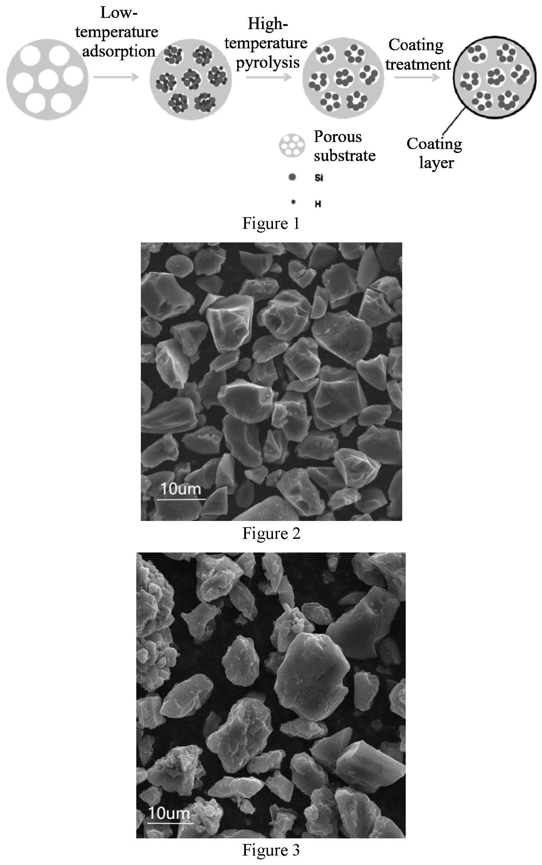

This example provided a method for preparing a negative electrode material, the process flowchart was shown in FIG. 1, and the method comprised the following steps.

(1) Low-temperature adsorption: a porous carbon substrate (with an average pore size of 4.5 nm, a pore volume of 1.0 $cm^3$/g, a Dv50 of 7.8 $\mu$m, a specific surface area of 1873 $m^2$/g, an SPAN value of 1.2 and a pore size concentration of 2.4) was placed in a vapor deposition furnace, the furnace temperature of the deposition furnace was adjusted to 100°C and the furnace pressure was adjusted to 0.05 KPa, a mixed gas composed of 70 vol% silane and 30 vol% nitrogen was introduced at a flow rate of 10 L/min, and the gas discharged from the tail gas pipe was observed and monitored by a mass spectrometer. When the silane gas appeared in the discharged gas after a holding time of 12 h, the low-temperature adsorption step was completed, at which point the introduction of silane gas was stopped while nitrogen was continuously introduced.

(2) High-temperature pyrolysis: after the low-temperature adsorption, the furnace temperature of the deposition furnace was adjusted to 550°C and the furnace pressure was adjusted to 1.5 KPa with nitrogen continuously introduced, and the gas discharged from the tail gas pipe was observed and monitored by a mass spectrometer. When the hydrogen content in the discharged gas dropped to zero after a holding time of 15 h, the high-temperature pyrolysis step was completed.

(3) Coating treatment: after the high-temperature pyrolysis step, the furnace temperature was adjusted to 800°C, a mixed gas composed of 60 vol% acetylene and 40 vol% nitrogen was introduced at a flow rate of 10 L/min for a deposition time of 2 h, after the carbon coating was completed, the furnace was cooled to room temperature, the material was subjected to means of disintegration, sieving, magnetic separation, etc., to obtain the silicon-carbon negative electrode material, with SEM image shown in FIG. 2.

Example 1-2: Increased low-temperature adsorption pressure

This example provided a method for preparing a negative electrode material, which was substantially the same as that of example 1-1, except that the furnace pressure in step (1) was adjusted to 0.15 KPa.

Example 1-3: Decreased low-temperature adsorption pressure

This example provided a method for preparing a negative electrode material, which was substantially the same as that of example 1-1, except that the furnace pressure in step (1) was adjusted to 0.0008 KPa.

Example 1-4: Increased low-temperature adsorption temperature

This example provided a method for preparing a negative electrode material, which was substantially the same as that of example 1-1, except that the furnace temperature in step (1) was adjusted to 180°C.

Example 1-5: Decreased low-temperature adsorption temperature

This example provided a method for preparing a negative electrode material, which was substantially the same as that of example 1-1, except that the furnace temperature in step (1) was adjusted to 30°C.

Comparative Example 1-1: Excessively high low-temperature adsorption pressure

This comparative example provided a method for preparing a negative electrode material, which was substantially the same as that of example 1-1, except that the furnace pressure in step (1) was adjusted to 1 KPa.

Comparative Example 1-2: Excessively low low-temperature adsorption temperature

This comparative example provided a method for preparing a negative electrode material, which was substantially the same as that of example 1-1, except that the furnace temperature in step (1) was adjusted to 10°C.

Comparative Example 1-3: Excessively high low-temperature adsorption temperature

This comparative example provided a method for preparing a negative electrode material, which was substantially the same as that of example 1-1, except that the furnace temperature in step (1) was adjusted to 250°C.

Comparative Example 1-4: Low-temperature adsorption step terminated before silane appeared in the low-temperature adsorption tail gas.

This comparative example provided a method for preparing a negative electrode material, which was substantially the same as that of example 1-1, except that the holding time in step (1) was adjusted to 10 h.

Comparative Example 1-5: Low-temperature adsorption step continued after silane appeared in the low-temperature adsorption tail gas.

This comparative example provided a method for preparing a negative electrode material, which was substantially the same as that of example 1-1, except that the holding time in step (1) was adjusted to 15 h.

Comparative Example 1-6

This example provided a method for preparing a negative electrode material, comprising the steps.

(1) In an argon atmosphere, a porous carbon material (with an average pore size of 4.5 nm, a pore volume of 0.98cm$^3$/g, a Dv50 of 7.5 μm, a specific surface area of 1847 m$^2$/g, a SPAN value of 1.2 and a pore size concentration of 2.8) as a substrate was placed in a deposition furnace at a temperature of 550°C. A mixed gas composed of 70 vol% silane and 30 vol% acetylene was introduced into the deposition furnace at a flow rate of 10 L/min, the pressure valve on the tail gas pipe was adjusted such that the furnace pressure was maintained at 1.5 KPa all the time, the gas was continuously introduced for 12 h, during which silicon particles and carbon particles were continuously nucleated and deposited inside the pores of the porous carbon material.;

(2) After the silicon-carbon deposition was completed, the deposition furnace was heated to 800°C, a mixed gas composed of 60 vol% acetylene and 40 vol% nitrogen was introduced at a flow rate of 10 L/min for a deposition time of 2 h, after the carbon coating was completed, the furnace was cooled to room temperature, the material was subjected to means of disintegration, sieving, magnetic separation, etc., to obtain the silicon-carbon negative electrode material, whose SEM image is shown in FIG. 3.

Comparative Example 1-7

This example provided a method for preparing a negative electrode material, comprising the steps which were substantially the same as those of example 1-6, except that the gas introduction time in step (1) was adjusted to 15 h.

Test Example 1-1

The composition and structure of the negative electrode materials obtained in the above examples and comparative examples were characterized. The specific surface area was measured using a TriStar 3020 specific surface area and pore size analyser (Micromeritics, USA), the Dv50 was determined by Mastersizer 3000 laser diffraction technology, and the tap density was tested with a tap density meter. The specific test results are shown in Table 1-1.

Table 1-1

| No. | Vapor deposition time (h) | Specific surface area (m$^2$/g) | Dv50 ($\mu$m) | Tap density (g/cm$^3$) |
|---|---|---|---|---|
| Example 1-1 | 12 | 4.7 | 9.2 | 0.98 |
| Example 1-2 | 15 | 8.4 | 9.5 | 0.94 |
| Example 1-3 | 10 | 5.8 | 10.4 | 0.97 |
| Example 1-4 | 14 | 6.9 | 8.3 | 0.91 |
| Example 1-5 | 11 | 7.1 | 9.0 | 0.95 |
| Comparative Example 1-1 | 18 | 6.6 | 9.5 | 0.89 |
| Comparative Example 1-2 | 9 | 7.5 | 8.8 | 0.97 |
| Comparative Example 1-3 | 19 | 8.0 | 8.4 | 0.93 |
| Comparative Example 1-4 | 10 | 15.4 | 9.6 | 0.94 |
| Comparative Example 1-5 | 15 | 8.8 | 10.0 | 0.99 |
| Comparative Example 1-6 | 12 | 7.0 | 8.7 | 0.90 |
| Comparative Example 1-7 | 14 | 5.9 | 9.6 | 0.93 |

Application Example 1-1

Batteries were assembled using the negative electrode materials prepared in the respective examples, which specifically comprised the following steps.

(1) Preparation of positive electrode plate: A positive electrode active material of lithium nickel cobalt manganese oxide (NCM811), a conductive agent of Super P, carbon nanotubes, and a binder of polyvinylidene fluoride (PVDF) were uniformly mixed at a mass ratio of 97 : 1 : 0.5 : 1.5 with N-methylpyrrolidone (NMP) to prepare a positive electrode slurry (with a solid content of 70%), the slurry was coated onto both sides of an aluminium foil current collector, dried at 100°C, and then cold-pressed at 4 MPa at room temperature, followed by trimming, cutting, slitting, tab welding, to obtain the positive electrode plate.
(2) Preparation of negative electrode plate: In a nitrogen protective atmosphere, a solvent of N-methylpyrrolidone (NMP) and a binder of PVDF was stirred and uniformly mixed, then a conductive agent of Super P was added and stirred and uniformly mixed, and then the negative electrode active material was added and stirred and uniformly mixed to prepare a negative electrode slurry (with a solid content of 50%).

The above negative electrode slurry was coated onto both sides of a copper foil current collector, dried at 100°C, and then cold-pressed at 4 MPa at room temperature, followed by trimming, cutting, slitting, tab welding, to obtain the negative electrode plate.

(3) Assembly of lithium-ion batteries

A PE porous polymer film was used as the separator. The prepared positive electrode plate, the separator, and the negative electrode plate were stacked in sequence, with the separator located between the positive and negative electrode plates, followed by winding to obtain a bare cell. The bare cell was placed in an aluminium-plastic package and dried at 100°C under a relative vacuum pressure of -0.95 × 105 Pa until the moisture content was 100 ppm or less. An electrolyte was injected into the dried bare cell. The electrolyte consisted of ethylene carbonate (EC), ethyl methyl carbonate (EMC), and diethyl carbonate (DEC) (EC : EMC : DEC volume ratio = 1 : 1 : 1) with $LiPF_6$ (1.0 M). The cell was then packaged, allowed to stand, formed (constant-current charged at 0.02 C for 2 h, and at 0.1 C for 2 h), shaped, and subjected to capacity testing (capacity grading), to prepare a pouch-type liquid lithium-ion battery.

During battery assembly, five batteries were prepared for each test group, and a total of five sets of data were tested. The final performance values were taken as the average of the five sets of data.

Test Example 3

The cycling performance of the battery was tested on an apparatus from Neware, specifically as follows:
At 25°C, the battery was first discharged at 0.1 C to 0.005 V, then discharged at 0.08 C to 0.001 V, discharged at 0.05 C to 0.001 V, and discharged at 0.02 C to 0.001 V, and then left to stand for 10 min. The battery was then charged at 0.1 C to 1.5 V and left to stand for 10 min. The charge and discharge capacities after the first cycle were recorded, and the initial Coulombic efficiency was calculated. The battery was cycled 100 times according to the above method. The charge and discharge capacities after 100 cycles were recorded, and the capacity retention rate after 100 cycles was calculated. The test and calculation process for the capacity retention rate after 500 cycles followed the same method. The resistivity was measured at 25°C using a semiconductor powder resistivity tester (30 MPa four-probe V1.4). The specific test results are shown in Table 1-2 below.

Table 1-2

| No. | Silicon content (%) | Reversible specific capacity (mAh/g) | Initial Coulombic efficiency (%) | Capacity retention rate after 100 cycles (%) | Capacity retention rate after 500 cycles (%) | Resistivity (Ω·cm) |
|---|---|---|---|---|---|---|
| Example 2-1 | 52.29 | 1857 | 92 | 96 | 89 | 4.51 |
| Example 2-2 | 52.11 | 1849 | 90 | 94 | 87 | 3.67 |
| Example 2-3 | 52.65 | 1870 | 92 | 95 | 86 | 4.14 |
| Example 2-4 | 52.62 | 1869 | 91 | 93 | 88 | 3.75 |
| Example 2-5 | 52.10 | 1850 | 91 | 90 | 82 | 4.91 |
| Comparative Example 2-1 | 53.18 | 1889 | 93 | 84 | 70 | 47.63 |
| Comparative Example 2-2 | 52.79 | 1875 | 92 | 80 | 63 | 14.33 |
| Comparative Example 2-3 | 52.49 | 1864 | 92 | 89 | 76 | 35.75 |
| Comparative Example 2-4 | 42.73 | 1547 | 85 | 96 | 88 | 5.48 |
| Comparative Example 2-5 | 59.05 | 1993 | 93 | 76 | / | 105.37 |
| Comparative Example 2-6 | 47.20 | 1709 | 87 | 90 | 79 | 39.85 |
| Comparative Example 2-7 | 52.17 | 1849 | 91 | 84 | 69 | 74.97 |

From the data of Examples 1-1 to 1-3 and Comparative Example 1-1, it can be seen that in the low-temperature adsorption step, maintaining a lower pressure inside the deposition furnace can effectively promote the adsorption by the porous substrate; an increase in the degree of negative pressure can promote the adsorption efficiency of substrate; and a decrease in the degree of negative pressure is such that gas molecules accumulate on the surface of the porous material and cannot effectively diffuse. As a result, surface floating silicon forms on the surface of the substrate, affecting the cycling stability of the silicon-carbon negative electrode material.

From the data of Examples 1-1, 1-4 and 1-5 and Comparative Examples 1-2 and 1-3, it can be seen that a relatively low temperature in the low-temperature adsorption step enables the reduction of the movement and diffusion of silane gas molecules and the adsorption effect of the substrate on the silane gas can be improved; however, when the adsorption temperature is too low, the gas molecules move too slowly and become unevenly dispersed after entering the porous substrate, leading to the agglomeration after the subsequent pyrolysis, which affects the stability of the negative electrode material.

From Example 1-1 and Comparative Examples 1-4 and 1-5, it can be seen that by determining the end time of the low-temperature adsorption step by the time when silane appears in the tail gas pipe, the amount of silane deposition can be effectively controlled, and excessive deposition can be avoided to prevent the appearance of surface floating silicon.

From Example 1-1 and Comparative Examples 1-6 and 1-7, it can be seen that the amount of silane deposited in Comparative Example 1-6 within the same time is significantly lower than that in Example 1-1, and the deposition position of silane in Comparative Example 1-6 cannot be effectively controlled, resulting in surface floating silicon, which leads to a significant increase in the resistivity of materials; and deposition levels comparable to those of Example 1-1 can only be achieved with an appropriate extension of deposition time, but as in Comparative Example 1-7, the silicon floating phenomenon is more pronounced at this point, such that the resistivity is increased, and the cycling stability of the material also is seriously affected and thus the service life of the battery is shortened.

The lithium-ion batteries assembled with the silicon-carbon negative electrode material prepared according to the present disclosure have excellent cycling stability, with a capacity retention rate after 100 cycles of 90% or more, up to 96%; and a capacity retention rate after 500 cycles of 80% or more, up to 87%; and the batteries have a low powder resistivity of <8 $\Omega\cdot$cm, a high reversible specific capacity, and a high initial Coulombic efficiency.

The features and performances of a silicon-carbon composite material, a preparation method therefor, and the use thereof in the present disclosure will be further described in detail below with reference to examples.

Some of the raw material parameters in the following examples are as follows:

Low-carbon-source carbon microspheres: Beijing Dekedaojin Technology Co., Ltd.; Model: PSC002000, residual carbon content: 15-20%, particle size: 2 $\mu$m.

High-carbon-source solid resin: Guangzhou Shuangli Rubber Raw Material Trading Co., Ltd.; Model: 9003-35-4, residual carbon content: 50-70%.

Example 2-1

This example provided a silicon-carbon composite material prepared by the following steps.

S1, Carbon microspheres with a residual carbon content of 15% and a resin with a residual carbon content of 55% were mixed at a mass ratio of 1 : 1 and dispersed in anhydrous ethanol to form a spray solution with a solid content of 30%.

S2, The above-mentioned spray solution was subjected to a spray experiment under spray curing conditions involving an atomization disc rotation speed of 28000 rpm, an inlet air temperature of 175°C, a feed rate of 1.8 L/h, and an induced draft fan frequency of 50 Hz, and carbon microsphere particles with a particle size of 5-20 $\mu$m was sprayed.

S3, The above-described cured carbon microsphere particles were subjected to a heat treatment in a nitrogen atmosphere at a heating rate of 10°C/min, and held at 400°C for 5 h for carbonization to obtain the carbonized carbon microspheres.

S4, The carbonized carbon microspheres described above were placed in a well-sealed rotary kiln, and the kiln was rotated at a frequency of 30 Hz, water vapor was introduced at a gas flow rate of 12 L/min, the rotary kiln was heated at a rate of 10°C/min to 900°C, held at that temperature for 8 h, and then cooled to room temperature to obtain the final material.

S5, The material obtained from S4 was soaked in 6.5% HCl and heated to 60°C with stirring for 1 h, then washed with pure water until neutral, and dried at 80°C to obtain a spherical porous carbon.

The sphericity of the spherical porous carbon was 92.5 %; the spherical porous carbon contained uniformly distributed micropores and mesopores, and the average pore size of the spherical porous carbon was 1.89 nm; the total pore volume of the spherical porous carbon with an average pore size of less than 4 nm was 0.84 cm$^3$/g; the spherical porous carbon had a mesoporosity of 19% and a microporosity of 81%; and the spherical porous carbon had a particle size of 8.3 $\mu$m; wherein the spherical porous carbon had a $D_{10}$ particle size of 3.5 $\mu$m; a Dv50 particle size of 8.3 $\mu$m; and a $D_{90}$ particle size of 19.8 $\mu$m.

S6, The spherical porous carbon material obtained from S5 was placed in a well-sealed rotary kiln, the kiln was rotated at a frequency of 40 Hz, and a mixed gas of a protective gas and a silicon source as a deposition gas source, namely, a mixed gas of nitrogen and silane (with a volume ratio of nitrogen to silane of 20 : 80) was introduced, with a deposition amount-to-feed ratio of 0.6, a deposition temperature of 500°C, and a deposition time of 6 h, to obtain the silicon-carbon composite material.

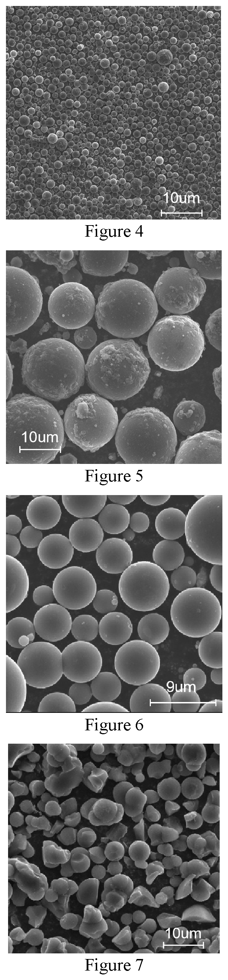

FIG. 4 shows a scanning electron micrograph of the silicon-carbon composite material prepared in Example 2-1. As shown in FIG. 4, by combining the low-carbon-source microspheres with the high-carbon-source resin matrix, and controlling the particle size of the spherical carbon by spray drying, a carbon substrate with a high carbon content and a good sphericity is prepared. Moreover, when preparing small spheres of the carbon substrate by this method, during the carbonization and alkali-activation pore-forming processes, no hollow phenomenon occurred, and no large internal pores were formed that would cause a reduction in strength.

Example 2-2

This example provided a silicon-carbon composite material that differed from Example 2-1 only in that the spray curing conditions of S2 differed, specifically as follows:

S2, The above-mentioned spray solution was subjected to a spray experiment under spray curing conditions involving an atomization disc rotation speed of 28000 rpm, an inlet air temperature of 190°C, a feed rate of 2.3 L/h, and an induced draft fan frequency of 50 Hz, and carbon microsphere particles with a particle size of 6-40 $\mu$m was sprayed.

FIG. 5 shows a scanning electron micrograph of the silicon-carbon composite material prepared in Example 2-2. As shown in FIG. 5, by combining the low-carbon-source microspheres with the high-carbon-source resin matrix, and controlling the particle size of the spherical carbon by spray drying, a carbon substrate with a high carbon content and a good sphericity is prepared. Moreover, when preparing small spheres of the carbon substrate by this method, during the carbonization and alkali-activation pore-forming processes, no hollow phenomenon occurred, and no large internal pores were formed that would cause a reduction in strength.

Example 2-3

This example provided a silicon-carbon composite material that differed from Example 2-1 only in that the spray curing conditions of S2 differed, specifically as follows:

S2, The above-mentioned spray solution was subjected to a spray experiment under spray curing conditions involving an atomization disc rotation speed of 28000 rpm, an inlet air temperature of 200°C, a feed rate of 3.2 L/h, and an induced draft fan frequency of 50 Hz, and carbon microsphere particles with a particle size of 5-20 $\mu$m was sprayed.

FIG. 6 shows a scanning electron micrograph of the silicon-carbon composite material prepared in Example 2-3. As shown in FIG. 6, by combining the low-carbon-source microspheres with the high-carbon-source resin matrix, and controlling the particle size of the spherical carbon by spray drying, a carbon substrate with a high carbon content and a good sphericity is prepared. Moreover, when preparing small spheres of the carbon substrate by this method, during the carbonization and alkali-activation pore-forming processes, no hollow phenomenon occurred, and no large internal pores were formed that would cause a reduction in strength.

Example 2-4

This example provided a silicon-carbon composite material which differed from Example 2-1 in that in S1, the mass ratio of the low-carbon-source microspheres to the high-carbon-source resin was 1 : 5, The other steps were exactly the same as in Example 2-1.

Example 2-5

This example provided a silicon-carbon composite material which differed from Example 2-1 in that in S3, the temperature of the carbonization treatment was 600°C; and the time of the carbonization treatment was 10 h. The other steps were exactly the same as in Example 2-1.

Example 2-6

This example provided a silicon-carbon composite material which differed from Example 2-1 in that in S3, the temperature of the carbonization treatment was 900°C; and the time of the carbonization treatment was 3 h. The other steps were exactly the same as in Example 2-1.

Example 2-7

This example provided a silicon-carbon composite material which differed from Example 2-1, in that in S4, the activation temperature was 800°C and the activation time was 20 h. The other steps were exactly the same as in Example 2-1.

Example 2-8

This example provided a silicon-carbon composite material which differed from Example 2-1, in that in S4, the activation temperature was 1000°C and the activation time was 7 h. The other steps were exactly the same as in Example 2-1.

Example 2-9

This example provided a silicon-carbon composite material, which differed from Example 2-1 in that the deposition amount-to-feed ratio was 0.4, the deposition temperature was 300°C, and the deposition time was 10 h. The other steps were exactly the same as in Example 2-1.

Example 2-10

This example provided a silicon-carbon composite material, which differed from Example 2-1 in that the deposition amount-to-feed ratio was 1.5, the deposition temperature was 800°C, and the deposition time was 5 h. The other steps were exactly the same as in Example 2-1.

Comparative Example 2-1

This comparative example provided a silicon-carbon composite material prepared by the following steps:

S1, A resin with a residual carbon content of 55% was dispersed in anhydrous ethanol to form a spray solution with a solid content of 30%.
S2, The above-mentioned spray solution was subjected to a spray experiment under spray curing conditions involving an atomization disc rotation speed of 28000 rpm, an inlet air temperature of 175°C, a feed rate of 1.8 L/h, and an induced draft fan frequency of 50 Hz, and carbon microsphere particles with a particle size of 5-20 $\mu$m and a sphericity of 70-80% was sprayed.
S3, The above-described cured carbon microsphere particles were subjected to heat treatment in a nitrogen atmosphere at a heating rate of 10°C/min, and held at 400°C for 5 h for carbonization to obtain the carbonized carbon microspheres.
S4, The carbonized carbon microspheres described above were placed in a well-sealed rotary kiln, and the kiln was rotated at a frequency of 30 Hz, water vapor was introduced at a gas flow rate of 12 L/min, the rotary kiln was heated at a rate of 10°C/min to 900°C, held at that temperature for 8 h, and then cooled to room temperature to obtain the final material.
S5, The material obtained from S4 was soaked in 6.5% HCl and heated to 60°C with stirring for 1 h, then washed with pure water until neutral, and dried at 80°C to obtain a spherical porous carbon.
S6, The spherical porous carbon material obtained from S5 was placed in a well-sealed rotary kiln, the kiln was rotated at a frequency of 40 Hz, and a mixed gas of a protective gas and a silicon source as a deposition gas source, namely, a mixed gas of nitrogen and silane (with a volume ratio of nitrogen to silane of 20 : 80) was introduced, with a deposition amount-to-feed ratio of 0.6, a deposition temperature of 500°C, and a deposition time of 6 h, to obtain the silicon-carbon composite material.

FIG. 7 shows an electron micrograph of the silicon-carbon composite material prepared in Comparative Example 2-1. As shown in FIG. 7, without the addition of low-carbon-source microspheres, the silicon-carbon composite material prepared by spray drying granulation using only high-carbon source resin solution has a poor sphericity.

Comparative Example 2-2

This comparative example provided a silicon-carbon composite material prepared by the following steps:

S1, A resin with a residual carbon content of 55% was dissolved in anhydrous ethanol to form a resin solution with a solid content of 30%, which was then cured in a vacuum oven at 120°C for 4 h.
S2, The above-described cured carbon particles were subjected to a heat treatment in a nitrogen atmosphere at a heating rate of 10°C/min, and held at 400°C for 5 h for carbonization to obtain the pre-carbonized material.

S3, The pre-carbonized material was crushed into uniform particles at the millimetre level using a crusher for later use.

S4, The carbonized carbon microspheres described above were placed in a well-sealed rotary kiln, and the kiln was rotated at a frequency of 30 Hz, water vapor was introduced at a gas flow rate of 12 L/min, the rotary kiln was heated at a rate of 10°C/min to 900°C, held at that temperature for 8 h, and then cooled to room temperature to obtain the final material.

S5, The material obtained from S4 was soaked in 6.5% HCl and heated to 60°C with stirring for 1 h, then washed with pure water until neutral, and dried at 80°C.

S6, The material from S5 was pulverized to Dv50 = 5-12 $\mu$m using an air jet mill.

S7, The material obtained from S6 was placed in a well-sealed rotary kiln, the kiln was rotated at a frequency of 40 Hz, and a mixed gas of a protective gas and a silicon source as a deposition gas source, namely, a mixed gas of nitrogen and silane (with a volume ratio of nitrogen to silane of 20 : 80) was introduced, with a deposition amount-to-feed ratio of 0.6, a deposition temperature of 500°C, and a deposition time of 6 h, to obtain the silicon-carbon composite material.

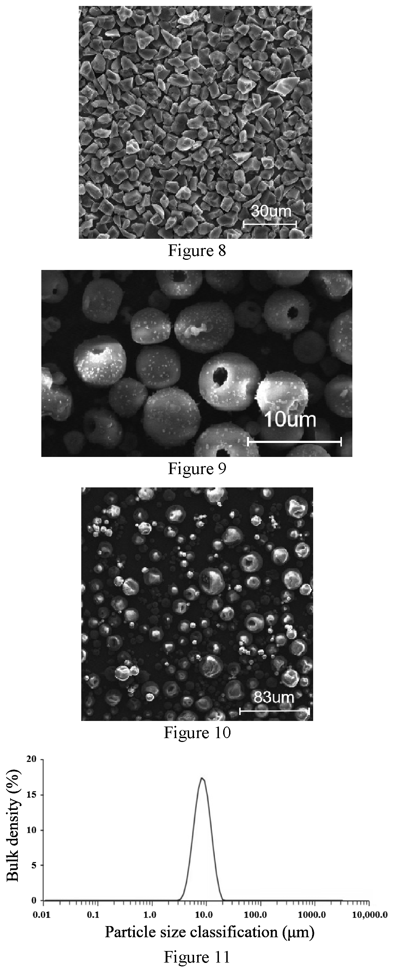

FIG. 8 shows an electron micrograph of the silicon-carbon composite material prepared in Comparative Example 2-2. As shown in FIG. 8, the silicon-carbon composite obtained without the addition of low-carbon-source microspheres and without the use of spray-drying, exhibits an irregular morphology.

Comparative Example 2-3

This comparative example provided a carbon microsphere particle prepared by the following steps:

S1, Carbon microspheres with a residual carbon content of 15% were cured directly in a vacuum oven at 120°C for 4 h.

S2, The above-described cured carbon microsphere particles were subjected to a heat treatment in a nitrogen atmosphere at a heating rate of 10°C/min, and held at 400°C for 5 h for carbonization.

FIG. 9 shows an electron micrograph of the silicon material prepared in Comparative Example 2-3. As shown in FIG. 9, the small spheres collapses and becomes hollow after carbonization.

Comparative Example 2-4

This comparative example provided a silicon-carbon composite material, which differed from Example 2-1 in that in S1, the mass ratio of the carbon microspheres with a residual carbon content of 15% to the resin with a residual carbon content of 55% was 2 : 1. The other steps were exactly the same as in Example 2-1.

Comparative Example 2-5

This comparative example provided a silicon-carbon composite material, which differed from Example 2-1 in that in S1, the mass ratio of the carbon microspheres with a residual carbon content of 15% to the resin with a residual carbon content of 55% was 1 : 6. The other steps were exactly the same as in Example 2-1.

Comparative Example 2-6

This comparative example provided a silicon-carbon composite material prepared by the following steps:

S1, Carbon microspheres with a residual carbon content of 15% and a resin with a residual carbon content of 55% were mixed at a mass ratio of 1 : 1 and dispersed in anhydrous ethanol to form a spray solution with a solid content of 30%.

S2, The above mixed solution was stirred and cured by heating for 8 h to form carbon microspheres with a sphericity of 60-70%.

S3, The above-described cured carbon microsphere particles were subjected to heat treatment in a nitrogen atmosphere at a heating rate of 10°C/min, and held at 400°C for 5 h for carbonization to obtain the carbonized carbon microspheres.

S4, The carbonized carbon microspheres described above were placed in a well-sealed rotary kiln, and the kiln was rotated at a frequency of 30 Hz, water vapor was introduced at a gas flow rate of 12 L/min, the rotary kiln was heated at a rate of 10°C/min to 900°C, held at that temperature for 8 h, and then cooled to room temperature to obtain the final material.

S5, The material obtained from S4 was soaked in 6.5% HCl and heated to 60°C with stirring for 1 h, then washed with pure water until neutral, and dried at 80°C to obtain a spherical porous carbon.

S6, The spherical porous carbon material obtained from S5 was placed in a well-sealed rotary kiln, the kiln was rotated at a frequency of 40 Hz, and a mixed gas of a protective gas and a silicon source as a deposition gas source, namely, a mixed gas of nitrogen and silane (with a volume ratio of nitrogen to silane of 20 : 80) was introduced, with a deposition amount-to-feed ratio of 0.6, a deposition temperature of 500°C, and a deposition time of 6 h, to obtain the silicon-carbon composite material.

FIG. 10 shows an electron micrograph of the carbon-silicon material prepared in Comparative Example 2-4. As shown in FIG. 10, the silicon-carbon composite material obtained without spray drying has a low sphericity.

Comparative Example 2-7

This comparative example provided a silicon-carbon composite material which differed from Example 2-1 in that in S2, the spray drying treatment process parameters comprised: a centrifugal disc rotation speed of 20000 rpm; an inlet air temperature of 250°C; a feed rate of 4.5 L/h; and an induced draft fan frequency of 35 Hz. The other steps were exactly the same as in Example 2-1.

Comparative Example 2-8

This comparative example provided a silicon-carbon composite material which differed from Example 2-1 in that in S2, the spray drying treatment process parameters comprised: a centrifugal disc rotation speed of 32000 rpm; an inlet air temperature of 150°C; a feed rate of 1.0 L/h; and an induced draft fan frequency of 55 Hz. The other steps were exactly the same as in Example 2-1.

Test Example 2-1

Test samples: The silicon-carbon composite materials provided in Examples 2-1 to 2-10, and the composite materials provided in Comparative Example 1-8;

Test method:

(1) Particle size test:

The particle size distribution of the powder and the particle size of the silicon-carbon composite material were tested using a laser particle size analyser in accordance with the provisions of GB/T 19077.

(2) Test of strength:

The specific surface area of the silicon-carbon composite material before the compression was tested using a specific surface area analyser and designated as $S_1$. The silicon-carbon composite material was placed in the sample chamber of a compression density meter and subjected to compaction (compaction conditions of 10 mm/min, a hold time of 60 s, and a pressure of 450 MPa) to break the sample. The specific surface area of the broken silicon-carbon composite material after the compaction was then measured using a specific surface area analyser and designated as $S_2$. The rate of change in the specific surface area of the silicon-carbon composite material was calculated by the following formula I to characterize the strength of the silicon-carbon composite material.

The strength of the silicon-carbon composite material is defined by the following formula:

$$P = (1 - \frac{S_2 - S_1}{S_1}) \times 100\%$$

wherein $P$ represents the strength of the silicon-carbon composite material, in %; $S_2$ represents the specific surface area of the silicon-carbon composite material after compression, in m$^2$/g; and $S_1$ represents the specific surface area of the silicon-carbon composite material before compression, in m$^2$/g.

(3) Capacity: At 25°C, the battery was first discharged at 0.1 C to 0.005 V, then discharged at 0.08 C to 0.001 V, discharged at 0.05 C to 0.001 V, and discharged at 0.02 C to 0.001 V, and then left to stand for 10 min. The battery was then charged at 0.1 C to 1.5 V and left to stand for 10 min. The charge and discharge capacities after the first cycle were recorded.

(4) Capacity retention rate after 200 cycles: The battery was cycled 200 times according to the above method.

The charge and discharge capacities after 200 cycles were recorded, and the capacity retention rate after 200 cycles was calculated. Capacity retention rate after 200 cycles = discharge capacity of the 200th cycle / discharge capacity of the first cycle × 100%

The specific test results are shown in Table 2-1:

Table 2-1

| Item | Median particle size Dv50 (μm) | Sphericity | Specific surface area (m²/g) | Strength (%) | Capacity mAh/g | Capacity retention rate after 200 cycles (%) |
|---|---|---|---|---|---|---|
| Example 2-1 | 8.3 | 92.5 | 3.01 | 90.32 | 1897 | 90.4 |
| Example 2-2 | 10.5 | 90.6 | 2.89 | 92.17 | 1884 | 93.0 |
| Example 2-3 | 12.5 | 90.8 | 3.27 | 93.34 | 1895 | 91.5 |
| Example 2-4 | 8.4 | 81.8 | 3.13 | 90.56 | 1863 | 90.8 |
| Example 2-5 | 8.7 | 93.1 | 3.34 | 94.60 | 1919 | 92.1 |
| Example 2-6 | 8.6 | 91.7 | 2.66 | 93.84 | 1886 | 91.3 |
| Example 2-7 | 8.3 | 92.8 | 2.88 | 94.77 | 1896 | 91.2 |
| Example 2-8 | 8.5 | 92.5 | 3.11 | 95.21 | 1890 | 90.8 |
| Example 2-9 | 7.9 | 91.9 | 3.09 | 94.13 | 1830 | 91.8 |
| Example 2-10 | 8.6 | 92.0 | 2.84 | 95.19 | 2010 | 91.3 |
| Comparative Example 2-1 | 8.5 | 76.4 | 3.29 | 86.28 | 1830 | 89.2 |
| Comparative Example 2-2 | 8.9 | - | 3.65 | 80.21 | 1793 | 85.8 |
| Comparative Example 2-3 | 8.4 | - | - | - | - | - |
| Comparative Example 2-4 | 8.2 | 93.3 | 30 | 87.43 | 1807 | 88.2 |
| Comparative Example 2-5 | 8.5 | 79.2 | 3.73 | 89.41 | 1789 | 89.5 |
| Comparative Example 2-6 | 7.9 | 61.9 | 3.58 | 84.20 | 1819 | 87.5 |
| Comparative Example 2-7 | 15.4 | 89.6 | 4.35 | 87.16 | 1850 | 77.2 |
| Comparative Example 2-8 | 6.7 | 91.3 | 2.44 | 91.22 | 1739 | 88.5 |

As shown in Table 2-1, the specific surface area of the silicon-carbon composite material of the present disclosure is 2 - 5 m²/g; when compressed at a pressure of 450 MPa for 30 s, the silicon-carbon composite material has a strength of 90% or more; the specific capacity of the silicon-carbon composite material is > 1500 mAh/g, and the capacity retention rate after 200 cycles of the silicon-carbon composite material is > 90%. This is illustrated. The silicon-carbon composite material described in the present disclosure has a high sphericity, such that the poor compression resistance due to many edges and corners is avoided during the rolling process, and the issues of the continuous formation of the solid electrolyte interface (SEI) film, the capacity attenuation, and the poor cycling performance caused by a low strength can be alleviated.

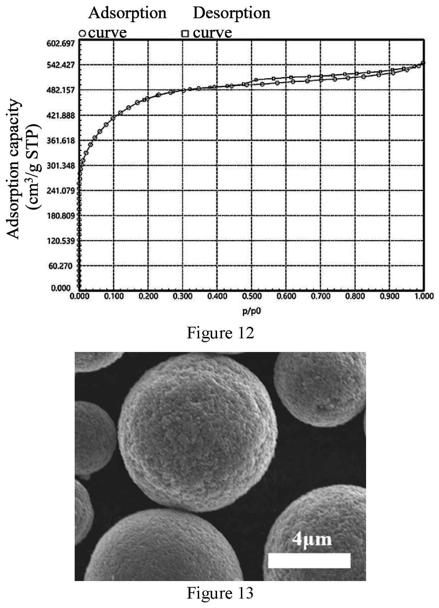

FIG. 11 shows a particle size distribution diagram of the silicon-carbon composite material prepared in Example 2-1. FIG. 12 shows an $N_2$ adsorption-desorption isotherm diagram of the silicon-carbon composite material prepared in Example 2-1. As shown in FIG.s 11 and 12, the single-point BET specific surface area of the silicon-carbon composite material is 0.20000:1014.12875 (m²/g); the total pore volume is 0.84 cm³/g; the micropore volume is 0.68 cm³/g; the average pore size is 1.89 nm; the mesoporosity is 19%; and the microporosity at P/Po is 81%.

The features and performances of a method for preparing a porous carbon, the porous carbon, a negative electrode material, and a secondary battery in the present disclosure will be further described in detail below with reference to examples.

Example 3-1

This example provided a method for preparing a negative electrode material, specifically comprising the steps of:

1) 20 g of CNTs and 400 g of zirconia balls were placed in a ball mill jar in four separate runs, with a ball mill rotation speed of 1500 rpm and a ball mill time of 20 h. The four runs of products were mixed uniformly and then sieved to obtain CNT particles with an average length of 20-50 nm and an average aspect ratio of 2.

2) 27 g of the ball-milled mixed CNT particles were put into 500 mL of deionized water and dispersed with ultrasonic stirring, wherein the ultrasonic frequency was set at 60 Hz, and the ultrasonic time was 40 minutes, and the stirring rate was 150 rpm; and at the end of sonication, a CNT-dispersed aqueous solution with a solid content of 5% was obtained.

3) 0.5 g of F127, 3 g of germanium dihydroxide, 21.5 g of phenol, 23.5 g of formaldehyde, and 1.5 g of sodium hydroxide were sequentially added to the CNT-dispersed aqueous solution, followed by an oil-bath treatment at 80°C for 4 h to obtain a precursor solution.

4) 3.5 g of hexamethylenetetramine was added to the precursor solution, the oil-bath was heated to 95°C, and maintained at that temperature for 6 h to obtain a phenolic resin microsphere suspension.

5) A water-soluble resin binder (water-soluble thermosetting phenolic resin solution) was mixed with the phenolic resin microsphere suspension at a 1 : 1 ratio, stirred for 1 h using a homogenizer, and then spray-dried with the parameters set as follows: an inlet air temperature of 180°C, an outlet air temperature of 90°C, a feed rate of 100 mL/h, and a centrifugal atomizer speed of 25000 rpm.

6) The powder collected in the spray-drying collection bottle was placed in an oven at 120°C and cured for 2 h, and then subjected to pre-oxidation in a muffle furnace by heating from room temperature to 300°C at a heating rate of 3°C/min and holding at that temperature for 2 h.

7) The pre-oxidized powder was placed in a tube furnace for carbonization, nitrogen was introduced into the tube furnace, and the temperature was raised from room temperature to 800°C at a heating rate of 5°C/min and held for 4 h to obtain spherical carbon.

8) The spherical carbon and KOH were placed in a tube furnace at a ratio of 1 : 2.5 and activated at 950°C for 3 h to obtain a spherical porous carbon, whose SEM image is shown in FIG. 13.

9) The spherical porous carbon was placed in a CVD furnace, and methane and silane were vapor-deposited at a ratio of 1 : 3 to obtain the spherical silicon-based negative electrode material.

Example 3-2

This example provided a method for preparing a negative electrode material, which differed from Example 3-1 only in that in step 1), germanium dihydroxide is replaced by tin chloride.

Example 3-3

This example provided a method for preparing a negative electrode material, which differed from Example 3-1 only in that in step 2), the ultrasonic time was shortened to 30 min.

Example 3-4

This example provided a method for preparing a negative electrode material, which differed from Example 3-1 only in that in step 5), the feed rate was increased to 300 ml/h.

Example 3-5

This example provided a method for preparing a negative electrode material, with the only difference from Example 3-1 being that in step 8), the ratio of spherical carbon to KOH was adjusted to 1 : 1.

Comparative Example 3-1

This comparative example provided a method for preparing a negative electrode material, which differed from Example 3-1 only in that step 1) was omitted and no CNT was added in step 2).

Comparative Example 3-2

This comparative example provided a method for preparing a negative electrode material, which differed from Example 3-1 only in that no germanium source was added in step 3).

Comparative Example 3-3

This comparative example provided a method for preparing a negative electrode material, which differed from Example 3-1 only in that step 2) was omitted and 27 g of CNT particles in step 1) were added in step 5).

Comparative Example 3-4

This comparative example provided a method for preparing a negative electrode material, which differed from Example 3-1 only in that step 1) was omitted.

Comparative Example 3-5

This comparative example provided a method for preparing a negative electrode material, which differed from Example 3-1 only in that step 3-4) was omitted, step 5) was modified as follow: the CNT-dispersed aqueous solution in step 2) and a water-soluble thermosetting phenolic resin were mixed in a ratio of 1 : 1 ratio, stirred for 1 h using a homogenizer, and then spray-dried with the parameters set as follows: an inlet air temperature of 180°C, an outlet air temperature of 90°C, a feed rate of 100 mL/h, and a centrifugal atomizer speed of 25000 rpm.

Test Example 3-1

The negative electrode materials obtained in the above-described Examples and Comparative Examples were tested, and the negative electrode material obtained in the above-described Examples and Comparative Examples was assembled into a battery, with the specific steps as follows: (1) Preparation of electrode plate: An active material, a binder, and a conductive carbon black were first placed in a mortar at a ratio of 8 : 1 : 1, and 5-8 drops of N-methylpyrrolidone were added dropwise to prepare a slurry. The above slurry was coated onto a copper foil and then dried in a vacuum oven at 80°C for 8 h before slicing to obtain electrode plates. (2) Assembly of coin cell: A negative electrode housing, a lithium plate, 3-4 drops of an electrolyte, a PF porous polymeric separator, 3-4 drops of the electrolyte, an electrode plate, and a positive electrode housing were assembled in order into a half-cell. The electrolyte used here was a solution composed of ethylene carbonate (EC), ethyl methyl carbonate (EMC), and diethyl carbonate (DEC) (EC : EMC : DEC volume ratio = 1 : 1 : 1) and $LiPF_6$ (1.0 M). To test the battery, the specific steps were as follows: at 25°C, the battery was first discharged at 0.1 C to 0.005 V, then discharged at 0.08 C to 0.001 V, discharged at 0.05 C to 0.001 V, and discharged at 0.02 C to 0.001 V, and then left to stand for 10 min; and the battery was then charged at 0.1 C to 1.5 V and left to stand for 10 min. The specific charge capacity after the first cycle was recorded, and the initial Coulombic efficiency was calculated. The results are shown in Tables 3-1 and 3-2.

Table 3-1

| | Pore volume ($cm^3$/g) | Specific surface area ($m^2$/g) | Average pore size (nm) | Particle size Dv50 ($\mu$m) |
|---|---|---|---|---|
| Example 3-1 | 1.02 | 1939 | 2.01 | 8.89 |
| Example 3-2 | 1.01 | 1916 | 2.00 | 8.87 |
| Example 3-3 | 0.99 | 1896 | 2.00 | 9.12 |
| Example 3-4 | 1.01 | 1926 | 2.01 | 10.00 |
| Example 3-5 | 0.83 | 1759 | 1.90 | 8.80 |
| Comparative Example 3-1 | 1.01 | 1926 | 2.00 | 8.68 |
| Comparative Example 3-2 | 1.02 | 1935 | 2.01 | 8.88 |
| Comparative Example 3-3 | 0.96 | 1877 | 1.99 | 9.08 |
| Comparative Example 3-4 | 1.02 | 1929 | 2.00 | 20.14 |
| Comparative Example 3-5 | 1.00 | 1958 | 2.22 | 8.88 |

Table 3-2

| | Tap density (g/mL) | Resistance ($\Omega$-cm, 20 MPa) | Specific charge capacity (mAh/g) | Initial Coulombic efficiency (%) | Cycling stability after 300 cycles (%) |
|---|---|---|---|---|---|
| Example 3-1 | 0.95 | 2.15 | 1953 | 93.01 | 86.35 |

(continued)

| | Tap density (g/mL) | Resistance ($\Omega$-cm, 20 MPa) | Specific charge capacity (mAh/g) | Initial Coulombic efficiency (%) | Cycling stability after 300 cycles (%) |
|---|---|---|---|---|---|
| Example 3-2 | 0.92 | 2.20 | 1900 | 92.38 | 86.20 |
| Example 3-3 | 0.90 | 2.06 | 1895 | 90.05 | 85.99 |
| Example 3-4 | 0.82 | 2.14 | 1888 | 90.02 | 85.87 |
| Example 3-5 | 0.92 | 3.06 | 1803 | 90.00 | 85.00 |
| Comparative Example 3-1 | 0.96 | 7.86 | 1764 | 89.58 | 79.85 |
| Comparative Example 3-2 | 0.94 | 3.69 | 1719 | 88.70 | 77.86 |
| Comparative Example 3-3 | 0.85 | 2.25 | 1800 | 89.89 | 78.55 |
| Comparative Example 3-4 | 0.80 | 9.89 | 1799 | 88.98 | 76.95 |
| Comparative Example 3-5 | 0.79 | 6.11 | 1654 | 88.88 | 76.43 |

It should be finally noted that the foregoing embodiments are merely used for illustrating rather than limiting the technical solutions of the disclosure. Although the disclosure has been illustrated in detail with reference to the foregoing embodiments, it should be understood by those of ordinary skill in the art that the technical solutions described in the foregoing embodiments may still be modified, or some or all of the technical features thereof may be equivalently substituted; and these modifications or substitutions do not make the essence of the corresponding technical solution depart from the scope of the technical solutions of the embodiments of the disclosure.

**Industrial applicability**

First, according to the present disclosure, by utilizing the morphology of the carbon microspheres and the high carbon content of the phenolic resin, a carbon substrate with a relatively high sphericity is synthesized and by the spray drying technology, the particle size of the carbon microspheres can be controlled well, and the particle size has a good uniformity. Compared with irregular resin-based silicon-carbon composite materials, the silicon-carbon material synthesized by this method has a higher strength and contains no natural macropores based on biomass inside. The silicon-carbon negative electrode material described in the present disclosure has a high sphericity, such that the poor compression resistance due to many edges and corners is avoided during the rolling process, and the continuous formation of the solid electrolyte interface (SEI) film, the capacity attenuation, and the poor cycling performance caused by a low strength can be alleviated.

Next, in the negative electrode material of the present disclosure, silicon is distributed within the pores of a porous substrate, and the pore structure of the porous substrate is utilized to suppress the volume expansion of silicon during the intercalation and de-intercalation of lithium, thereby improving the cycling performance of the negative electrode material. In the method for preparing the negative electrode material of the present disclosure, a silicon source is first adsorbed within the cavities of the porous substrate; and the temperature inside the furnace is then raised to decompose the silane in the cavities, resulting in the deposition of nano-silicon particles in the cavities, such that the content of floating silicon is reduced.

Finally, in the present disclosure, the porous carbon is prepared using nano-scale carbon nanotubes. The good conductivity of the carbon nanotubes is helpful to improve the conductivity of the porous carbon, and the size of the carbon nanotubes has an important influence on the conductivity of the porous carbon. Generally, a continuous conductive path can be formed by increasing the length of the carbon nanotubes, which is more conducive to improving the conductivity of the porous carbon and the mechanical strength of the porous carbon. However, longer carbon nanotubes are prone to agglomeration and have a poorer dispersion stability, which is detrimental to the uniform distribution of carbon nanotubes in the suspension and thus is detrimental to the improvement of the conductivity of the porous carbon. Therefore, the use of nano-scale carbon nanotubes in the present disclosure is more conducive to increasing the conductivity of the porous carbon. In addition, the doping of small amounts of tin or germanium enables the reduction of residual dead lithium by facilitating the intercalation and de-intercalation of lithium ions, and thus improving the initial Coulombic efficiency.

**Claims**

1. A negative electrode material, **characterized by** comprising a porous substrate, a silicon element distributed within pores of the porous substrate, and carbon coated on a surface of the porous substrate, the negative electrode material having a silicon content of 30 wt%-80 wt%, a resistivity of less than 5 $\Omega \cdot$cm, and a value of W > 8, where W = silicon content/resistivity, with the silicon content being in wt% and the resistivity being in $\Omega \cdot$cm.

2. The negative electrode material according to claim 1, **characterized in that** the negative electrode material has a specific surface area of 4 m$^2$/g-9 m$^2$/g;

   and/or the negative electrode material has a Dv50 of 1 $\mu$m-15 $\mu$m;
   and/or the negative electrode material has a tap density of 0.7 g/cm$^3$-1.5 g/cm$^3$.

3. A method for preparing the negative electrode material according to claim 1 or 2, **characterized in that** the method comprises:

   a low-temperature adsorption, involving placing a porous substrate in an environment containing a silicon source gas and adsorbing the silicon source gas;
   a high-temperature pyrolysis, involving heating the porous substrate adsorbed with the silicon source gas to decompose the silicon source gas, so as to obtain a porous substrate supported with nano-silicon within a pore structure; and
   a coating treatment, involving forming a carbon coating layer on the porous substrate supported with nano-silicon within the pore structure, to obtain the negative electrode material.

4. The method for preparing the negative electrode material according to claim 3, **characterized in that** the low-temperature adsorption step is carried out in a low-temperature adsorption apparatus, and is completed when the silicon source gas is discharged from the tail gas outlet of the low-temperature adsorption apparatus during the low-temperature adsorption process; and the low-temperature adsorption step satisfies at least one of the following a-c:

   a, the low-temperature adsorption is carried out at a temperature of 25°C-200°C and a pressure of 0.0001 KPa-0.3 Kpa for a time of 1 h-30 h;
   b, the silicon source is selected from at least one of silane, disilane, dichlorosilane and trichlorosilane; and
   c, the silicon source-containing gas further comprises an inert gas, and the volume fraction of the silicon source in the silicon source-containing gas is between 50 vol%-99 vol%.

5. The method for preparing the negative electrode material according to claim 3 or 4, **characterized in that** the high-temperature pyrolysis step is carried out in a high-temperature pyrolysis apparatus, and is completed when the gas discharged from the tail gas outlet of the high-temperature pyrolysis apparatus is free of hydrogen during the high-temperature pyrolysis process; and
   the high-temperature pyrolysis is carried out at a temperature of 300°C-800°C and a pressure of 0.01 Kpa-5 KPa for a time of 1 h-50 h.

6. The method for preparing the negative electrode material according to any one of claims 3-5, **characterized in that** the porous substrate satisfies at least one of the following A-G:

   A, an SPAN value is < 1.5;
   B, Dv50 ranges from 2 $\mu$m-20 $\mu$m;
   C, the porous substrate has a specific surface area of 400 m$^2$/g-2000 m$^2$/g, optionally 900 m$^2$/g-2000 m$^2$/g;
   D, an average pore size is 1.2 nm-7.0 nm, optionally 1.5 nm-5.0 nm;
   E, a pore volume is 0.3 cm$^3$/g- 2.0 cm$^3$/g, optionally 0.5 cm$^3$/g-1.8 cm$^3$/g;
   F, a pore size concentration is 0.3-6.0, calculated as $(P_V90-P_V10)/P_V50$, optionally 0.3-8; and
   G, the porous substrate is selected from at least one of a porous carbon, porous metal oxides, coordination polymers, porous metals, and porous ceramics, optionally a porous carbon.

7. The method for preparing the negative electrode material according to any one of claims 3-6, **characterized in that** the coating treatment comprises introducing a carbon-containing gas source into a reactor where a porous substrate supported with nano-silicon within the pore structure is placed for carbon deposition to form a carbon coating layer; and the step of the coating treatment satisfies at least one of the following (1) - (4):

(1), the carbon deposition is carried out at a temperature of 300°C-1300°C for a time of 1 h-10 h;

(2), the carbon-containing gas source comprises a carbon source gas selected from alkane gases with a cracking temperature within the carbon deposition temperature range;

(3), the carbon-containing gas source further comprises an inert gas; and

(4), the volume fraction of the carbon source gas in the carbon-containing gas source is 50 vol%-99 vol%.

8. A negative electrode plate, **characterized by** comprising the negative electrode material according to claim 1 or 2 or a negative electrode material prepared by the method according to any one of claims 3 to 7.

9. A secondary battery, **characterized by** comprising the negative electrode plate according to claim 8.

10. An electrical device, **characterized by** comprising the secondary battery according to claim 9.

11. A silicon-carbon composite material, **characterized in that** the silicon-carbon composite material comprises active material particles, wherein the active material particles comprise a spherical porous carbon skeleton and nano-silicon particles; and

a strength of the silicon-carbon composite material is defined by the following formula:

$$P = (1 - \frac{S_2 - S_1}{S_1}) \times 100\%$$

wherein P represents the strength of the silicon-carbon composite material, in %; $S_2$ represents the specific surface area of the silicon-carbon composite material after compression, in m$^2$/g; and $S_1$ represents the specific surface area of the silicon-carbon composite material before compression, in m$^2$/g.

12. The silicon-carbon composite material according to claim 11, **characterized in that** the specific surface area of the silicon-carbon composite material is 2-5 m$^2$/g; and

preferably, when compressed at a pressure of 450 MPa for 30 s, the silicon-carbon composite material has a strength of 90% or more.

13. The silicon-carbon composite material according to claim 11 or 12, **characterized in that** a sphericity of the spherical porous carbon is ≥ 80%;

preferably, an interior of the spherical porous carbon contains uniformly distributed micropores and/or mesopores inside;

preferably, the total pore volume of the spherical porous carbon with an average pore size of less than 4 nm is ≥ 0.7 cm$^3$/g;

preferably, the spherical porous carbon has a mesoporosity of < 20% and a microporosity of > 80%; and

preferably, the spherical porous carbon has a particle size of 1-60 μm; wherein the spherical porous carbon has a $D_{10}$ particle size of 3-7 μm; a Dv50 particle size of 8-13 μm; and a $D_{90}$ particle size of 15-40 μm.

14. The silicon-carbon composite material according to any one of claims 11-13, **characterized in that** the nano-silicon particles are deposited in the pores of the spherical porous carbon;

preferably, the silicon-carbon composite material has a silicon content of 40-60%;

preferably, the specific capacity of the silicon-carbon composite material is > 1500 mAh/g, preferably > 1800 mAh/g; and

preferably, the capacity retention rate after 200 cycles of the silicon-carbon composite material is > 90%.

15. A method for preparing the silicon-carbon composite material according to any one of claims 11-14, **characterized in that** the preparation method comprises the following steps:

mixing low-carbon-source microspheres, a high-carbon-source resin, and a solvent to obtain a mixed solution;

subjecting the mixed solution to a spray drying treatment to obtain small spherical particles;

successively subjecting the small spherical particles to a carbonization treatment and an activation treatment to obtain a spherical porous carbon; and

performing a vapor deposition on the spherical porous carbon to obtain the silicon-carbon composite material.

16. The method for preparing a silicon-carbon composite material according to claim 15, **characterized in that** a residual carbon content of the low-carbon-source microspheres is $\leq 40\%$; a residual carbon content of the high-carbon-source resin is 50-70%;

   preferably, the low-carbon-source microspheres comprise any one or a combination of at least two of polystyrene microspheres, polylactic acid microspheres, or polyvinylidene fluoride microspheres;
   preferably, the high-carbon-source resin is a phenolic resin and/or a phenolic resin derivative;
   preferably, a mass ratio of the low-carbon-source microspheres to the high-carbon-source resin is 1 : (1-5);
   preferably, the solvent comprises an alcohol solvent, preferably ethanol;
   preferably, a solid content of the mixed solution is 30-60 wt%;
   preferably, the mixed solution further comprises 5-10 wt% of carbon tubes; and
   preferably, the mixed solution further comprises a conductive polymer, wherein the conductive polymer comprises any one or a combination of at least two of polyacetylene, polythiophene, polypyrrole, or polyaniline.

17. The method for preparing a silicon-carbon composite material according to claim 15 or 16, **characterized in that** the spray drying treatment process parameters comprise: a centrifugal disc rotation speed of 24000-30000 rpm; an inlet air temperature of 160-230°C; a feed rate of 1.2-4 L/h; and an induced draft fan frequency of 40-50 Hz;

   preferably, the carbonization treatment is carried out at a temperature of 400-900°C for a time of 3-10 h;
   preferably, the activation treatment is carried out by means of physical activation;
   preferably, the physical activation step involves introducing an activation gas into the carbon microspheres obtained after the carbonization treatment for physical activation;
   preferably, the activation gas comprises carbon dioxide and/or water vapor;
   preferably, the physical activation is carried out at a temperature of 800-1000°C for a time of 7-20 h;
   preferably, the activation treatment is followed by a further step of impurity removal, involving subjecting the activated porous carbon microspheres to acid washing for impurity removal, followed by water washing and then drying;
   preferably, the acid washing is carried out using 5-8 wt% of a hydrochloric acid solution;
   preferably, the acid washing is carried out at a temperature of 20-100°C for a time of 1-24 h;
   preferably, the temperature of the drying is 70-90°C;
   preferably, the deposition gas source for the vapor deposition is a mixed gas of a protective gas and a silicon source gas;
   preferably, the protective gas comprises any one or a combination of at least two of nitrogen, neon, argon, krypton, xenon, or radon;
   preferably, the silicon source gas comprises any one or a combination of at least two of silane, disilane, dichlorosilane, or trichlorosilane;
   preferably, the silicon source gas further comprises a carbon source gas, and the carbon source gas comprises any one or a combination of at least two of methane, ethane, acetylene, or ethylene;
   preferably, the volume ratio of the protective gas to the silicon source gas is (10-30) : (70-90);
   preferably, the content of the carbon source gas accounts for 0-30% of the total volume of the silicon source gas;
   preferably, the ratio of the deposition amount in the vapor deposition to the feed material is (0.4-1.5) : 1; and
   preferably, the vapor deposition is carried out at a temperature of 300-800°C for a time of 5-10 h.

18. Use of the silicon-carbon composite material according to any one of claims 11-14 in the preparation of a battery negative electrode material.

19. A method for testing the strength of a silicon-carbon composite material, **characterized in that** the testing method comprises the steps of:

   obtaining the specific surface area of the silicon-carbon composite material before compression, designated as $S_1$;
   subjecting the silicon-carbon composite material to a compaction treatment to break the sample, so as to obtain the specific surface area of the silicon-carbon composite material broken after compression, designated as $S_2$; and
   calculating the rate of change in the specific surface area of the silicon-carbon composite material by the following formula I to characterize the strength of the silicon-carbon composite material; and

the strength of the silicon-carbon composite material is defined by the following formula:

$$P = \left(1 - \frac{S_2 - S_1}{S_1}\right) \times 100\%$$

wherein P represents the strength of the silicon-carbon composite material, in %; $S_2$ represents the specific surface area of the silicon-carbon composite material after compression, in $m^2/g$; and $S_1$ represents the specific surface area of the silicon-carbon composite material before compression, in $m^2/g$.

20. The testing method for a silicon-carbon composite material according to claim 19, **characterized in that** the rate of the compaction treatment is 8-12 mm/min, preferably 10 mm/min;

preferably, the compaction treatment has a pressure-holding time of 10-50 s, preferably 30 s; and
preferably, the compaction treatment is carried out at a pressure of 450-500 MPa.

21. A method for preparing the porous carbon, **characterized in that** the method comprises:

granulation, involving drying and granulating a phenolic resin microsphere suspension to obtain a powder, wherein nano-carbon nanotubes are dispersed in the phenolic resin microspheres; and
carbonization, involving successively performing secondary curing, pre-oxidation, and carbonization on the powder to obtain the porous carbon.

22. The method for preparing a porous carbon according to claim 21, **characterized in that** the nano-carbon nanotubes have an average length of 20 nm-50 nm and an average aspect ratio of 1.5-5;

and/or the mass ratio of the nano-carbon nanotubes to the total mass of a phenolic raw material and an aldehyde raw material in the phenolic resin microsphere suspension is 1 : (1.5-10);
and/or a doping source is further dispersed in the phenolic resin microspheres, and the doping source comprises at least one of a germanium source and a tin source, the germanium source being selected from at least one of orthogermanate, metagermanate, germanium dihydroxide, and germanium tetrahydroxide, and the tin source being selected from at least one of tin chloride, tin nitrate, and tin sulphate;
and/or a doping source is further dispersed in the phenolic resin microspheres, and the mass ratio of the nano-carbon nanotubes to the doping source in the phenolic resin microsphere suspension is (5-10) : 1.

23. The method for preparing a porous carbon according to claim 22, **characterized in that** the method for preparing the phenolic resin microsphere suspension comprises: mixing a dispersant, a doping source, a phenolic raw material, an aldehyde raw material, and a catalyst with an aqueous solution with dispersed nano-carbon nanotubes, and maintaining the temperature to obtain a prepolymer solution; and

mixing the prepolymer solution with a curing agent for a first curing to obtain the phenolic resin microsphere suspension; and
preferably, the preparation method for the phenolic resin microsphere suspension satisfies at least one of the following features A-G:

A. the dispersant is selected from at least one of F127, PVA, PEG, and sodium silicate;
B. the aldehyde raw material is selected from at least one of formaldehyde and furfural;
C. the phenolic raw material selected from at least one of phenol and resorcinol, the mass ratio of the phenolic raw material to the aldehyde raw material being 1 : (0.8-1.2);
D. the catalyst is selected from at least one of sodium hydroxide and lithium hydroxide, the ratio of the catalyst to the total mass of the phenolic raw material and the aldehyde raw material being 1 : (25-35);
E. the temperature is maintained for 4 h-6 h at 75°C-85°C;
F. the curing agent is selected from at least one of hexamethylenetetramine and aqueous ammonia, the ratio of the curing agent to the total mass of the phenolic raw material and the aldehyde raw material being 1 : (11-15); and
G. the first curing is carried out at 90-95°C for a time of 2 h-8 h.

24. The method for preparing a porous carbon according to claim 23, **characterized in that** the method for preparing the aqueous solution with dispersed nano-carbon nanotubes comprises: subjecting a mixed solution of nano-carbon nanotubes and water to ultrasonic stirring to obtain the aqueous solution with dispersed nano-carbon nanotubes; and the preparation method for the aqueous solution with dispersed nano-carbon nanotubes satisfies at least one of the following features a-c:

    a. an ultrasound frequency of 50 Hz-70 Hz; a stirring rate of 50 rpm-200 rpm; and an ultrasonic stirring time of 30 min-60 min;
    b. the solid content of the aqueous solution with dispersed nano-carbon nanotubes being 0.1 wt%-10 wt%; and
    c. the nano-carbon nanotubes being obtained by ball-milling a carbon nanotube raw material, the ball-milling parameters including: a ball-to-material ratio of (20-50) : 1, a ball mill rotation speed of 500 rpm-2000 rpm, and a gas in an inert gas atmosphere.

25. The method for preparing a porous carbon according to any one of claims 21-24, **characterized in that** a mixed solution of a phenolic resin microsphere suspension and a water-soluble binder is spray dried to obtain the powder, the spray drying parameters comprising: an inlet air temperature of 160-200°C; an outlet air temperature of 80°C-120°C; a feed rate of 100 mL/h-300 mL/h; and a centrifugal atomization disc rotation speed of 23000 rpm-27000 rpm;

    and/or the water-soluble binder is selected from at least one of a water-soluble resin, a starch, a dextrin and a polyvinyl alcohol;
    and/or the volume ratio of the phenolic resin microsphere suspension to the water-soluble binder is 1 : (0.5-4).

26. The method for preparing a porous carbon according to any one of claims 21-25, **characterized in that** the second curing is carried out at a temperature of 100°C-140°C for a time of 1 h-4 h;

    and/or the pre-oxidation is carried out at a temperature of 280°C-320°C for a time of 1 h-5 h, with a heating rate of 1°C/min-5°C/min;
    and/or the carbonization is carried out at a temperature of 800°C-1000°C for a time of 4 h-8 h, with a heating rate of 4°C/min-6°C/min.

27. The method for preparing a porous carbon according to any one of claims 21-26, **characterized in that** the method further comprises activating the porous carbon with an activating agent to obtain an activated porous carbon, wherein the activation is carried out at a temperature of 700°C-1100°C, for a time of 2 h-30 h, and the mass ratio of the porous carbon to the activating agent is 1 : (0.5-4).

28. A porous carbon, **characterized in that** it is obtained by the preparation method according to any one of claims 21-27; and
preferably, the porous carbon satisfies at least one of the following (1) - (4):

    (1) a pore volume in a range of 0.3 $cm^3$/g-1.4 $cm^3$/g;
    (2) a specific surface area in a range of 800 $m^2$/g-2600 $m^2$/g;
    (3) an average pore size of 1.65 nm-3.02 nm; and
    (4) the particle size Dv50 in a range of 4 $\mu$m-30 $\mu$m.

29. A negative electrode material, **characterized by** comprising the porous carbon according to claim 28 and silicon and/or carbon distributed on the porous carbon.

30. A secondary battery, **characterized by** comprising a negative electrode material according to claim 29.

Figure 1

Figure 2

Figure 3

Figure 4

Figure 5

Figure 6

Figure 7

Figure 8

Figure 9

Figure 10

Figure 11

Figure 12

Figure 13

## INTERNATIONAL SEARCH REPORT

| | International application No. |
|---|---|
| | **PCT/CN2025/106950** |

| **A.** | **CLASSIFICATION OF SUBJECT MATTER** |
|---|---|

H01M 4/36(2006.01)i; H01M4/62(2006.01)i; H01M4/38(2006.01)i; C01B32/05(2017.01)i

According to International Patent Classification (IPC) or to both national classification and IPC

| **B.** | **FIELDS SEARCHED** |
|---|---|

Minimum documentation searched (classification system followed by classification symbols)

H01M4/-: C01B32/-

Documentation searched other than minimum documentation to the extent that such documents are included in the fields searched

Electronic data base consulted during the international search (name of data base and, where practicable, search terms used)

CNTXT, VEN, ENTXT, 读秀, EUXIU, 中国期刊网全文数据库, Chinese Journal Full-text Database: 碳一新能源, 锂宸, 负极, 多孔碳, 包覆, 低温吸附, 高温热解, 硅碳, 碳硅, 比表面积, 气相沉积, 喷雾干燥, 压实比表面积, 酚醛树脂, 碳纳米管, 锗, 锡, 碳化, negative electrode, porous carbon, silicon particles, sphericity, coat+, specific surface area, vapor deposition, spray, phenolic resin, carbon nanotube

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 118431452 A (CARBON ONE NEW ENERGY GROUP CO., LTD. et al.) 02 August 2024 (2024-08-02)<br>   claims 1-10 | 1-10 |
| PX | CN 119108526 A (CARBON ONE NEW ENERGY (HANGZHOU) CO., LTD.) 10 December 2024 (2024-12-10)<br>   claims 1-10 | 11-20 |
| PX | CN 119160873 A (CARBON ONE NEW ENERGY (HANGZHOU) CO., LTD.) 20 December 2024 (2024-12-20)<br>   claims 1-10 | 21-30 |
| X | CN 118156472 A (ZHEJIANG LICHEN NEW MATERIAL TECHNOLOGY CO., LTD.) 07 June 2024 (2024-06-07)<br>   description, paragraphs 36-38, 44-45, 53, 55, 57, 87 and 131 | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2025** | **24 September 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 756 912 A1

## INTERNATIONAL SEARCH REPORT

International application No.

**PCT/CN2025/106950**

### C. DOCUMENTS CONSIDERED TO BE RELEVANT

| Category* | Citation of document, with indication, where appropriate, of the relevant passages | Relevant to claim No. |
|---|---|---|
| Y | CN 118173769 A (CARBON ONE NEW ENERGY (HANGZHOU) CO., LTD.) 11 June 2024 (2024-06-11)<br>description, paragraphs 20-28 and 30 | 11-18 |
| Y | CN 118231603 A (LANXI ZHIDE NEW ENERGY MATERIALS CO., LTD.) 21 June 2024 (2024-06-21)<br>description, paragraph 122 | 11-18 |
| X | CN 118231603 A (LANXI ZHIDE NEW ENERGY MATERIALS CO., LTD.) 21 June 2024 (2024-06-21)<br>description, paragraph 122 | 19-20 |
| X | CN 117819518 A (JINGHE XINCHENG SHAANMEI TECHNOLOGY RESEARCH INSTITUTE NEW ENERGY MATERIAL CO., LTD.) 05 April 2024 (2024-04-05)<br>description, paragraphs 5-17 and 20 | 21-22, 25-30 |
| Y | CN 117819518 A (JINGHE XINCHENG SHAANMEI TECHNOLOGY RESEARCH INSTITUTE NEW ENERGY MATERIAL CO., LTD.) 05 April 2024 (2024-04-05)<br>description, paragraphs 5-17 and 20 | 22-30 |
| Y | CN 117712351 A (SHANGHAI SHANSHAN NEW MATERIALS CO., LTD.) 15 March 2024 (2024-03-15)<br>description, paragraph 86 | 22-30 |
| A | CN 116779816 A (ANHUI KEDA PURUI ENERGY TECHNOLOGY CO., LTD.) 19 September 2023 (2023-09-19)<br>entire document | 1-30 |
| A | US 2023178733 A1 (KOREA INSTITUTE OF CERAMIC ENGINEERING AND TECHNOLOGY) 08 June 2023 (2023-06-08)<br>entire document | 1-30 |

Form PCT/ISA/210 (second sheet) (July 2022)

## INTERNATIONAL SEARCH REPORT

| | International application No. |
|---|---|
| | **PCT/CN2025/106950** |

**Box No. III    Observations where unity of invention is lacking (Continuation of item 3 of first sheet)**

This International Searching Authority found multiple inventions in this international application, as follows:

The first invention (claims 1-10) relates to a negative electrode material, a preparation method therefor, and the use thereof. The second invention (claims 11-20) relates to a silicon-carbon composite material, a preparation method therefor, the use thereof, and a detection method. The third invention (claims 21-30) relates to a preparation method for porous carbon, porous carbon, and the use thereof.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

   ☐ The additional search fees were accompanied by the applicant's protest but the applicable protest fee was not paid within the time limit specified in the invitation.

   ☐ No protest accompanied the payment of additional search fees.

Form PCT/ISA/210 (continuation of first sheet) (July 2022)

## INTERNATIONAL SEARCH REPORT
### Information on patent family members

International application No.

**PCT/CN2025/106950**

| Patent document cited in search report | | | Publication date (day/month/year) | Patent family member(s) | | | Publication date (day/month/year) |
|---|---|---|---|---|---|---|---|
| CN | 118431452 | A | 02 August 2024 | CN | 118431452 | B | 05 November 2024 |
| CN | 119108526 | A | 10 December 2024 | None | | | |
| CN | 119160873 | A | 20 December 2024 | None | | | |
| CN | 118156472 | A | 07 June 2024 | None | | | |
| CN | 118173769 | A | 11 June 2024 | None | | | |
| CN | 118231603 | A | 21 June 2024 | WO | 2025050642 | A1 | 13 March 2025 |
| | | | | KR | 20250038635 | A | 19 March 2025 |
| | | | | EP | 4546450 | A1 | 30 April 2025 |
| | | | | EP | 4546450 | A4 | 14 May 2025 |
| CN | 117819518 | A | 05 April 2024 | None | | | |
| CN | 117712351 | A | 15 March 2024 | None | | | |
| CN | 116779816 | A | 19 September 2023 | None | | | |
| US | 2023178733 | A1 | 08 June 2023 | KR | 20210154780 | A | 21 December 2021 |
| | | | | KR | 102385948 | B1 | 12 April 2022 |
| | | | | JP | 2023082643 | A | 14 June 2023 |
| | | | | JP | 7304988 | B2 | 07 July 2023 |
| | | | | EP | 4190747 | A1 | 07 June 2023 |
| | | | | US | 2023178733 | A1 | 08 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024108896162
- CN 2024112386533
- CN 2024113194738
- GB 19077 T